# EUROPEAN PATENT APPLICATION

(11) **EP 4 832 532 A1**
(43) Date of publication of application: **28.10.2026**
(21) Application number: 25747736.4
(22) Date of filing: 23.01.2025
(51) Int. Cl.: H04W 12/04

(54) **COMMUNICATION METHOD, DEVICE, NETWORK ELEMENT, MEDIUM, CHIP SYSTEM AND PRODUCT**

(30) Priority: 31.01.2024 CN 202410143265
(71) Applicant: Honor Device Co., Ltd., Shenzhen, Guangdong 518040 (CN)
(72) Inventor: LIU, Xu, Shenzhen, Guangdong 518040 (CN)
(74) Representative: Isarpatent
(86) International application number: PCT/CN2025/074179
(87) International publication number: WO 2025/162166

(57) **Abstract**

Embodiments of this application provide a communication method, a device, a network element, a medium, a chip system, and a product, and relate to the field of communication technologies. The method includes: separately sending first indication information to a target network element and a terminal device when an inter-network element cell handover is performed, where the first indication information is used to indicate the target network element and the terminal device to synchronously perform key updating, and the inter-network element cell handover means that an original network element in which an original cell from which the terminal device performs a cell handover is located is different from the target network element in which a target cell is located. In this way, it is ensured that a key of the target network element and a key of the terminal device are updated in a timely manner when the inter-network element cell handover is performed, thereby improving key use security in a communication process.

## Description

This application claims priority to Chinese Patent Application No. 202410143265.0, filed with the China National Intellectual Property Administration on January 31, 2024 and entitled "COMMUNICATION METHOD, DEVICE, NETWORK ELEMENT, MEDIUM, CHIP SYSTEM, AND PRODUCT", which is incorporated herein by reference in its entirety.

### TECHNICAL FIELD

This application relates to the field of communication technologies, and in particular, to a communication method, a device, a network element, a medium, a chip system, and a product.

### BACKGROUND

A mobile communication network provides an LTM (Layer triggered mobility, execution layer triggered mobility) mechanism. In the LTM mechanism, a terminal device may perform L3 measurement reporting to a network side, and the network side may decide, based on an L3 measurement reporting result of the terminal device, to change a serving cell of the terminal device. In a process of changing the serving cell, the terminal device may be handed over from an original cell to a target cell. After the serving cell is changed, to ensure secure communication between the terminal device and a network element, a key of the terminal device and a key of the network element needs to be synchronized.

For a current LTM mechanism, when the terminal device changes the serving cell, if the original cell and the target cell are cells covered by a same base station, the key of the terminal device and the key of the network element may not need to be changed, and original keys may be used. If the original cell and the target cell are cells covered by different base stations, after the terminal device changes the serving cell, the key of the terminal device and the key of the network element need to be updated.

Therefore, for a handover between cells covered by different base stations, how to synchronously update the key of the network element and the key of the terminal device becomes an urgent technical problem to be resolved.

### SUMMARY

Embodiments of this application are applied to the field of communication technologies, and provide a communication method, a device, a network element, a medium, a chip system, and a product, to update a key of a target network element and a key of a terminal device in a timely manner when an inter-network element cell handover is performed, thereby improving key use security in a communication process.

According to a first aspect, an embodiment of this application provides a communication method. The method may be performed by a terminal device, or may be performed by a component (for example, a chip or a circuit) configured in the terminal device. This is not limited in this application.

For example, the method includes: receiving first indication information. The first indication information is used to indicate to perform key updating synchronously with a target network element, the first indication information is sent when an inter-network element cell handover is performed, the inter-network element cell handover is a handover from an original cell corresponding to an original network element to a target cell corresponding to a target network element, and the original network element is different from the target network element.

Therefore, when the inter-network element cell handover is determined to be performed, the first indication information is sent to both the terminal device and the target network element, so that the terminal device and the target network element simultaneously perform key updating under an indication of the first indication information. In this way, it is ensured that a key of the target network element is consistent with a key of the terminal device, and a network device after the cell handover and the terminal device use respective keys to transmit data or information, thereby improving security in a communication process.

When the inter-network element cell handover occurs on the terminal device, after the terminal device changes a serving cell, key consistency between a network element and the terminal device can be ensured even if a network element of the changed target cell is changed.

In this application, a handover scenario of the inter-network element cell handover may be any cell handover scenario, for example, may be an LTM cell handover, namely, an inter-network element LTM cell handover. The original network element separately sends the first indication information to the target network element and the terminal device when performing the inter-network element LTM cell handover. The first indication information may indicate the terminal device and the target network element to synchronously perform key updating.

Optionally, the network element may be a device having a specific transmission function in a network. The network element may include a base station or a central unit (Centralized Unit, CU). Therefore, the original network element in this application may be an original base station or an original CU, and the target network element may be a target base station or a target CU. In addition, the network element may alternatively be a device of another hardware structure or a combination. This application does not limit a specific device type or device composition of the network element.

In this application, a handover scenario of the inter-network element cell handover may be any cell handover scenario, for example, may be an LTM cell handover, namely, an inter-network element LTM cell handover. The original network element separately sends the first indication information to the target network element and the terminal device when performing the inter-network element LTM cell handover.

It should be understood that the first indication information may be carried in media access control-control element MAC CE signaling for a handover or dedicated signaling. The first indication information is transmitted through original MAC CE signaling, so that communication resources can be saved. However, setting the dedicated signaling to carry the first indication information may enable more abundant information exchange manners between UE and a network element.

With reference to the first aspect, in some implementations of the first aspect, the first indication information includes at least one of the following:
a next hop chaining counter NCC and algorithm indication information.

In addition, the first indication information may further include another parameter, for example, may include a key KgNB, so that the terminal device and the target network element use a same key.

However, to enable the algorithm indication information to explicitly indicate a security algorithm of the terminal device, the algorithm indication information is at least one of the following:
indication information indicating whether to use an original security algorithm;
whether to execute an integrity protection algorithm and/or an encryption algorithm; and
an algorithm index.

Optionally, the original security algorithm is a security algorithm configured on the terminal device, and the security algorithm may include an integrity protection algorithm and/or an encryption algorithm. The integrity protection algorithm may be used to derive KRRC-int and KUP-int. The encryption algorithm may be used to derive KRRC-enc and KUP-enc.

Optionally, the method further includes: before the receiving first indication information, the method further includes:
receiving configuration information, where the configuration information is used to configure a security algorithm determined by a candidate network element for a terminal device based on security information of the terminal device, and the candidate network element includes the target network element.

With reference to the first aspect, in some implementations of the first aspect, the configuration information includes at least one of the following:
each candidate cell and one security algorithm correspondingly configured for the terminal device;
each candidate cell and one security algorithm set correspondingly configured for the terminal device, where the security algorithm set includes a plurality of security algorithms;
each candidate cell set/group and one security algorithm correspondingly configured for the terminal device; and
each candidate cell set/group and one security algorithm set correspondingly configured for the terminal device, where the security algorithm set includes a plurality of security algorithms.

Optionally, the method may further include: the security information of the terminal device is carried in a cell handover request received by the candidate network element, and the cell handover request is provided by the original network element; and
the security information of the terminal device is provided by a core network element for the candidate network element, and the core network element includes an access and mobility management network element AMF. In addition, the core network element may further include a session management function SMF network element or a user plane function UPF network element.

With reference to the first aspect, in some implementations of the first aspect, the security information includes at least one of the following:
a security capability of the terminal device, a security level of the terminal device, and a security attribute of the terminal device.

With reference to the first aspect, in some implementations of the first aspect, the configuration information is carried in an RRC reconfiguration message or is carried in media access control-control element MAC CE signaling.

According to a second aspect, an embodiment of this application provides a communication method. The method may be performed by an original network element, or may be performed by a component (for example, a chip or a circuit) configured in the original network element. This is not limited in this application.

For example, the method includes: separately sending first indication information to a target network element and a terminal device when an inter-network element cell handover is performed. The first indication information is used to indicate the target network element and the terminal device to synchronously perform key updating, and the inter-network element cell handover means that an original network element in which an original cell from which the terminal device performs a cell handover is located is different from the target network element in which a target cell is located.

With reference to the second aspect, in some implementations of the second aspect, the first indication information includes at least one of the following:
a next hop chaining counter NCC and algorithm indication information.

However, to enable the algorithm indication information to explicitly indicate a security algorithm of the terminal device, the algorithm indication information is at least one of the following:
indication information indicating whether to use an original security algorithm;
whether to execute an integrity protection algorithm and/or an encryption algorithm; and
an algorithm index.

With reference to the second aspect, in some implementations of the second aspect, the first indication information is carried in media access control-control element MAC CE signaling for a handover or dedicated signaling.

Optionally, the method may further include:
sending configuration information to the terminal device, where the configuration information is used to configure a security algorithm determined by a candidate network element for the terminal device based on security information of the terminal device, and the candidate network element includes the target network element.

With reference to the second aspect, in some implementations of the second aspect, the configuration information includes at least one of the following:
each candidate cell and one security algorithm correspondingly configured for the terminal device;
each candidate cell and one security algorithm set correspondingly configured for the terminal device, where the security algorithm set includes a plurality of security algorithms;
each candidate cell set/group and one security algorithm correspondingly configured for the terminal device; and
each candidate cell set/group and one security algorithm set correspondingly configured for the terminal device, where the security algorithm set includes a plurality of security algorithms.

Optionally, the method may further include:
sending a cell handover request to the candidate network element, where the cell handover request is used to indicate the candidate network element to obtain the security information of the terminal device, the security information is used to determine the security algorithm of the terminal device, and the candidate network element includes the target network element.

With reference to the second aspect, in some implementations of the second aspect, the method further includes at least one of the following:
the security information of the terminal device is carried in the cell handover request; and
the security information of the terminal device is provided by a core network element for the candidate network element, and the core network element includes an access and mobility management network element AMF.

With reference to the second aspect, in some implementations of the second aspect, the security information includes at least one of the following:
a security capability of the terminal device, a security level of the terminal device, and a security attribute of the terminal device.

With reference to the second aspect, in some implementations of the second aspect, the configuration information is carried in an RRC reconfiguration message or is carried in media access control-control element MAC CE signaling.

According to a third aspect, an embodiment of this application provides a communication method. The method may be performed by a target network element, or may be performed by a component (for example, a chip or a circuit) configured in the target network element. This is not limited in this application.

For example, the method includes: receiving first indication information. The first indication information is used to indicate to perform key updating synchronously with a terminal device, the first indication information is sent when an inter-network element cell handover is performed, the inter-network element cell handover is a handover from an original cell corresponding to an original network element to a target cell corresponding to a target network element, and the original network element is different from the target network element.

With reference to the third aspect, in some implementations of the third aspect, the first indication information includes at least one of the following:
a next hop chaining counter NCC and algorithm indication information.

However, to enable the algorithm indication information to explicitly indicate a security algorithm of the terminal device, the algorithm indication information is at least one of the following:
indication information indicating whether to use an original security algorithm;
whether to execute an integrity protection algorithm and/or an encryption algorithm; and
an algorithm index.

With reference to the third aspect, in some implementations of the third aspect, the first indication information is carried in media access control-control element MAC CE signaling for a handover or dedicated signaling.

Optionally, the method may further include:
receiving a cell handover request, where the cell handover request is used to indicate the target network element to obtain security information of the terminal device; and
determining a security algorithm of the terminal device based on the security information.

Optionally, the method further includes at least one of the following:
the security information of the terminal device is carried in the cell handover request; and
the security information of the terminal device is provided by a core network element, and the core network element includes an access and mobility management network element AMF.

With reference to the third aspect, in some implementations of the third aspect, the security information includes at least one of the following:
a security capability of the terminal device, a security level of the terminal device, and a security attribute of the terminal device.

According to a fourth aspect, a communication apparatus is provided, including modules or units configured to perform the method in any one of the first aspect and the possible implementations of the first aspect.

According to a fifth aspect, a communication apparatus is provided, including modules or units configured to perform the method in any one of the second aspect and the possible implementations of the second aspect.

According to a sixth aspect, a communication apparatus is provided, including modules or units configured to perform the method in any one of the third aspect and the possible implementations of the third aspect.

According to a seventh aspect, a communication apparatus is provided, including a processor. The processor is coupled to a memory, and may be configured to execute instructions in the memory, to implement the method in any one of the first aspect and the possible implementations of the first aspect. Optionally, the apparatus further includes the memory. Optionally, the apparatus further includes a communication interface. The processor is coupled to the communication interface.

In an implementation, the communication apparatus is a terminal device. When an apparatus for processing candidate cell configuration information is the terminal device, the communication interface may be a transceiver, or an input/output interface.

In another implementation, the communication apparatus is a chip configured in a terminal device. When an apparatus for processing candidate cell configuration information is the chip configured in the terminal device, the communication interface may be an input/output interface.

Optionally, the transceiver may be a transceiver circuit. Optionally, the input/output interface may be an input/output circuit.

According to an eighth aspect, a communication apparatus is provided, including a processor. The processor is coupled to a memory, and may be configured to execute instructions in the memory, to implement the method in any one of the second aspect and the possible implementations of the second aspect. Optionally, the apparatus further includes the memory. Optionally, the apparatus further includes a communication interface. The processor is coupled to the communication interface.

In an implementation, the communication apparatus is an original network element. When the communication apparatus is the original network element, the communication interface may be a transceiver, or an input/output interface.

In another implementation, the communication apparatus is a chip configured in an original network element. When the communication apparatus is the chip configured in the original network element, the communication interface may be an input/output interface.

Optionally, the transceiver may be a transceiver circuit. Optionally, the input/output interface may be an input/output circuit.

According to a ninth aspect, a communication apparatus is provided, including a processor. The processor is coupled to a memory, and may be configured to execute instructions in the memory, to implement the method in any one of the third aspect and the possible implementations of the third aspect. Optionally, the apparatus further includes the memory. Optionally, the apparatus further includes a communication interface. The processor is coupled to the communication interface.

In an implementation, the communication apparatus is a target network element. When the communication apparatus is the target network element, the communication interface may be a transceiver, or an input/output interface.

In another implementation, the communication apparatus is a chip configured in a target network element. When the communication apparatus is the chip configured in the target network element, the communication interface may be an input/output interface.

Optionally, the transceiver may be a transceiver circuit. Optionally, the input/output interface may be an input/output circuit.

According to a tenth aspect, a processor is provided, including: an input circuit, an output circuit, and a processing circuit. The processing circuit is configured to: receive a signal through an input circuit, and transmit a signal through an output circuit, so that the processor performs the method in any one of the first aspect, the second aspect, or the third aspect, and the possible implementations of the first aspect, the second aspect, or the third aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, a receiver, a signal output by the output circuit may be output to, for example, a transmitter and transmitted by the transmitter, and the input circuit and the output circuit may be a same circuit, where the circuit separately serves as the input circuit and the output circuit at different moments. Specific implementations of the processor and various circuits are not limited in embodiments of this application.

According to an eleventh aspect, a processing apparatus is provided, including a processor and a memory. The processor is configured to: read instructions stored in the memory, receive a signal through a receiver, and transmit a signal through a transmitter, to perform the method in any one of the first aspect, the second aspect, or the third aspect, and the possible implementations of the first aspect, the second aspect, or the third aspect.

Optionally, there are one or more processors and one or more memories.

Optionally, the memory may be integrated in the processor, or the memory and the processor are separately disposed.

In a specific implementation process, the memory may be a non-transitory (non-transitory) memory, such as a read-only memory (read-only memory, ROM). The memory and the processor may be integrated on a same chip, or may be respectively disposed on different chips. A type of the memory and a manner of disposing the memory and the processor are not limited in this embodiment of this application.

It should be understood that, for a related data exchange process, for example, sending indication information may be a process of outputting indication information from the processor, and receiving capability information may be a process of receiving and inputting capability information by the processor. Specifically, data output by the processor may be output to the transmitter, and input data received by the processor may come from the receiver. The transmitter and the receiver may be collectively referred to as a transceiver.

The processing apparatus in a twelfth aspect may be one or more chips. A processor in the processing apparatus may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a thirteenth aspect, an embodiment of this application provides a terminal device, including a processor, a memory, and a transceiver. The transceiver is configured to send and receive data, the memory is configured to store code instructions, and the processor is configured to run the code instructions. When executing the code instructions stored in the memory, the processor is configured to indicate the terminal device to perform the method described in any one of the first aspect and the possible implementations of the first aspect.

According to a fourteenth aspect, an embodiment of this application provides a network device, including a processor, a memory, and a transceiver. The transceiver is configured to send and receive data, the memory is configured to store code instructions, and the processor is configured to run the code instructions. When executing the code instructions stored in the memory, the processor is configured to indicate a terminal device to perform the method described in any one of the second aspect and the possible implementations of the second aspect or the third aspect and the possible implementations of the third aspect.

According to a fifteenth aspect, an embodiment of this application provides a computer-readable storage medium. The computer-readable storage medium stores a computer program or instructions, and when the computer program or the instructions run on a computer, the computer is enabled to perform the method described in any one of the first aspect, the second aspect, or the third aspect, and the possible implementations of the first aspect, the second aspect, or the third aspect.

According to a sixteenth aspect, this application provides a chip or a chip system. The chip or the chip system includes at least one processor and a communication interface, the communication interface and the at least one processor are interconnected through a line, and the at least one processor is configured to run a computer program or instructions, to perform the method in any one of the first aspect, the second aspect, or the third aspect, and the possible implementations of the first aspect, the second aspect, or the third aspect. The communication interface in the chip may be an input/output interface, a pin, a circuit, or the like.

According to a seventeenth aspect, an embodiment of this application provides a computer program product including a computer program. When the computer program runs on a computer, the computer is enabled to perform the method in any one of the first aspect, the second aspect, or the third aspect, and the possible implementations of the first aspect, the second aspect, or the third aspect.

In a possible implementation, the chip or the chip system described above in this application further includes at least one memory, and the at least one memory stores instructions. The memory may be a storage unit, for example, a register or a cache, inside the chip, or may be a storage unit (for example, a read-only memory or a random access memory) of the chip.

It should be understood that the fourth aspect, the seventh aspect, and the thirteenth aspect of this application correspond to the technical solution of the first aspect of this application; the fifth aspect, the eighth aspect, and the fourteenth aspect of this application correspond to the technical solution of the second aspect of this application; the sixth aspect, the ninth aspect, and the fourteenth aspect of this application correspond to the technical solution of the third aspect of this application; and the tenth aspect, the eleventh aspect, the twelfth aspect, and the fifteenth aspect to the seventeenth aspect of this application correspond to the technical solution of the first aspect, the second aspect, or the third aspect of this application. Beneficial effects achieved by the aspects and corresponding feasible implementations are similar, and details are not described again.

### BRIEF DESCRIPTION OF DRAWINGS

FIG. 1 is a schematic diagram of an architecture of a communication system 100 to which an embodiment of this application is applied;
FIG. 2 is a diagram of signaling interaction of an example of an LTM handover procedure;
FIG. 3 is an example diagram of an example of an architecture of a CU and a DU;
FIG. 4 is a diagram of signaling interaction of an example of a conventional key updating method;
FIG. 5 is a diagram of signaling interaction of a communication method according to an embodiment of this application from a perspective of device interaction;
FIG. 6 is a schematic flowchart of an example of a key updating method;
FIG. 7 is a diagram of signaling interaction of another communication method according to an embodiment of this application from a perspective of device interaction;
FIG. 8 are a diagram of signaling interaction of another communication method according to an embodiment of this application from a perspective of device interaction;
FIG. 9 is a schematic block diagram of an apparatus for processing candidate cell configuration information according to an embodiment of this application;
FIG. 10 is a possible schematic structural diagram of a terminal device according to an embodiment of this application; and
FIG. 11 is a possible schematic structural diagram of a primary cell network device according to an embodiment of this application, for example, may be a schematic structural diagram of a base station.

### DESCRIPTION OF EMBODIMENTS

Technical solutions of this application are described below with reference to the accompanying drawings.

The technical solutions in embodiments of this application may be applied to various communication systems such as a long term evolution (Long Term Evolution, LTE) system, an LTE frequency division duplex (Frequency Division Duplex, FDD) system, LTE time division duplex (Time Division Duplex, TDD), a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) communication system, a new radio access technology (new radio Access Technology, NR), vehicle-to-X (vehicle-to-X, V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (Long Term Evolution-Vehicle, LTE-V), internet of vehicles, machine type communication (machine type communication, MTC), internet of things (Internet of Things, IoT), long term evolution-machine (Long Term Evolution-Machine, LTE-M), and machine to machine (Machine to Machine, M2M).

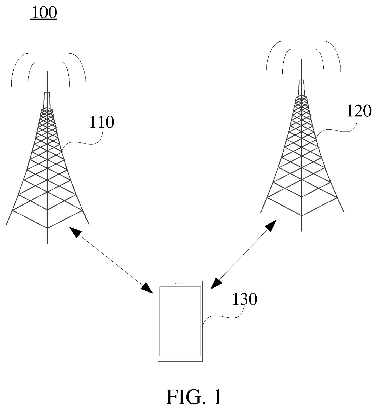

For ease of understanding of embodiments of this application, a communication system to which embodiments of this application are applicable is first described in detail with reference to FIG. 1. FIG. 1 is a schematic diagram of a communication system of a communication method and a communication apparatus to which embodiments of this application are applicable. The communication apparatus may be a terminal device, an original network element, or a target network element. As shown in FIG. 1, the communication system 100 may include at least two network elements, for example, a network element 110 and a network element 120 shown in FIG. 1. The communication system 100 may further include at least one terminal device, for example, a terminal device 130 shown in FIG. 1. The terminal device may be mobile or fixed. Both the network element 110 and the network element 120 are devices or units that may communicate with the terminal device 130 through a radio link, for example, a base station, a base station controller, or a central unit (Centralized Unit, CU). Each network element may provide communication coverage for a specific geographical region, and may communicate with a terminal device located in the coverage region (a cell).

FIG. 1 shows examples of two network elements and one terminal device. Optionally, the communication system 100 may include at least one network element, and a coverage area of each network element may include another quantity of terminal devices. This is not limited in embodiments of this application.

Each of the foregoing communication devices, for example, the network element 110, the network element 120, or the terminal device 130 in FIG. 1, may be configured with a plurality of antennas. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that each communication device may include a plurality of components (for example, a processor, a modulator, a multiplexer, a demodulator, a demultiplexer, or an antenna) related to signal sending and receiving. Therefore, the network element may communicate with the terminal device by using a multi-antenna technology.

Optionally, the wireless communication system 100 may further include another network entity such as a network controller or a mobility management entity. This is not limited in embodiments of this application.

In embodiments of this application, the network element may also be referred to as a network device, and may be any device having a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home eNodeB (for example, Home evolved NodeB or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), or a transmission and reception point (transmission and reception point, TRP); or may be a gNB (the next Generation NodeB, next-generation NodeB) in a 5G system, for example, an NR system, a transmission point (TRP or TP), or one or a group of antenna panels (including a plurality of antenna panels) of a base station in a 5G system; or may be a network node constituting a gNB or a transmission point, for example, a baseband unit (BBU), a central unit (Centralized Unit, CU), or a distributed unit (distributed unit, DU).

In some deployments, the gNB may include a CU and a DU. The gNB may further include an antenna element (active antenna unit, AAU). The CU implements a part of functions of the gNB, and the DU implements a part of the functions of the gNB. For example, the CU is responsible for processing a non-real-time protocol and service, and implementing functions at radio resource control (radio resource control, RRC) and packet data convergence protocol (packet data convergence protocol, PDCP) layers. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions and related functions of radio frequency processing and an active antenna. Information at the RRC layer eventually becomes information at the PHY layer, or is obtained by converting information at the PHY layer. Therefore, in this architecture, higher layer signaling, for example, RRC layer signaling, may be considered as being sent by the DU or sent by the DU and the AAU. It may be understood that the network element may be a device including one or more of a CU node, a DU node, and an AAU node. In addition, the CU may be classified as a network element in an access network (radio access network, RAN), or the CU may be classified as a network element in a core network (core network, CN). This is not limited in this application.

The network element provides a service for a cell, and the terminal device communicates with the cell by using a transmission resource (for example, a frequency domain resource or a spectrum resource) allocated by the network element. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of a small coverage area and a low transmit power, and are applicable to providing high-speed data transmission services.

In embodiments of this application, the terminal device may also be referred to as user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus. The terminal device in embodiments of this application may include a handheld device, a vehicle-mounted device, or the like. For example, some terminal devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile communication network (public land mobile network, PLMN), or the like. This is not limited in embodiments of this application.

As an example rather than a limitation, in embodiments of this application, the terminal device may alternatively be a wearable device. The wearable device may also be referred to as a wearable smart device, and is a general term for wearable devices that are intelligently designed and developed for daily wear by using a wearable technology, for example, glasses, gloves, a watch, clothing, and shoes. The wearable device is a portable device that is directly worn on a body or integrated into clothing or an accessory of a user. The wearable device is not merely a hardware device, but also implements powerful functions through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to be used together with other devices such as smartphones, for example, various smart bands, or smart jewelry for monitoring physical signs.

In addition, in embodiments of this application, the terminal device may alternatively be a terminal device in an internet of things (internet of things, IoT) system. IoT is an important part in future development of information technologies, and is mainly technically characterized in connecting things to networks by using communication technologies, to achieve intelligent networks of human-machine interconnection and interconnection between things.

The terminal device in embodiments of this application may also be referred to as a terminal apparatus, user equipment (user equipment, UE), a mobile station (mobile station, MS), a mobile terminal (mobile terminal, MT), an access terminal, a user unit, a user station, a mobile station, a mobile station, a remote station, a remote terminal, a mobile device, a user terminal, a terminal, a wireless communication device, a user agent, a user apparatus, or the like.

In embodiments of this application, the terminal device or each network element includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a windows operating system, that implement service processing by using a process (process). The application layer includes applications such as a browser, an address book, word processing software, and instant messaging software.

A specific form of the terminal device is not limited in this application.

To clearly describe technical solutions in embodiments of this application, the following briefly describes some terms and technologies in embodiments of this application.
1. Cell (cell): The cell is described from a perspective of a higher layer in terms of resource management, mobility management, or a serving unit. A coverage area of each network element may be divided into one or more cells, and each cell may correspond to one or more frequencies, or each cell may be considered as a region including a coverage area of one or more frequencies.

It should be noted that, the cell may be a region within a coverage area of a wireless network of a network element. In embodiments of this application, different cells may correspond to a same or different network elements. For example, a network element to which a cell #1 belongs and a network element to which a cell #2 belongs may be different network elements, for example, base stations. In other words, the cell #1 and the cell #2 may be managed by different base stations. Alternatively, for another example, a network element that manages a cell #1 and a network element that manages a cell #2 may be different radio frequency processing units of a same base station, for example, a radio remote unit (radio remote unit, RRU). In other words, the cell #1 and the cell #2 may be managed by a same base station, and have a same baseband processing unit and a same intermediate frequency processing unit, but have different radio frequency processing units. Alternatively, for still another example, a network element to which the cell #1 belongs and a network element to which the cell #2 belongs may be a same network element, for example, a base station. In other words, the cell #1 and the cell #2 may be managed by a same base station. In this case, the cell #1 and the cell #2 are co-located. This is not particularly limited in this application.

As described above, in some possible deployments, a gNB may include a CU and a DU. In this deployment, the cell #1 and the cell #2 may be managed by a same CU and a same DU, that is, share a CU and share a DU; or the cell #1 and the cell #2 may be managed by a same CU and different DUs, that is, share a CU but do not share a DU; or the cell #1 and the cell #2 may be managed by different CUs and different DUs, that is, do not share a CU and do not share a DU.

2. Handover: In a wireless communication system, when a terminal device moves from one cell to another cell or approaches another cell, a handover needs to be performed to maintain continuous communication of the terminal device. In embodiments of this application, an original cell/source cell is a cell that provides a service for the terminal device before the handover, and a target cell is a cell that provides a service for the terminal device after the handover. Related information (for example, a physical cell identifier of the target cell, frequency information, and random access resource information required for a handover to the target cell) about the target cell may be indicated by using a handover message. The handover message is sent, to the terminal device, by a network element (namely, a source network element) to which the source cell belongs.

The handover can be an intra-station handover or an inter-station handover. The intra-station handover may mean that the source cell and the target cell belong to a same network element (for example, a base station or a CU), where the source cell and the target cell may be a same cell or different cells. The inter-station handover may mean that the source cell and the target cell belong to different network elements (for example, base stations or CUs). This is not limited in this application.

It should be understood that, a cell is a coverage region of a network element, the original cell corresponds to the original network element (for example, an original base station/source CU), and the target cell corresponds to a target network element (for example, a target base station/target CU).

In a conventional handover procedure, mobility management of a terminal device is controlled by a network element. To be specific, the network element may indicate, by using a handover message, a cell to which the terminal device is handed over and how to perform a handover. For example, an original network element sends a handover message to the terminal device to control the terminal device to be handed over from an original cell to a target cell. The handover message may be an RRC message. For example, in an LTE system, the RRC message may be an RRC connection reconfiguration message carrying a mobility control information (mobility control info) information element; and in an NR system, the RRC message may be an RRC reconfiguration message carrying a reconfiguration with sync (reconfiguration with sync) information element.

3. LTM (Layer triggered mobility, execution layer-triggered mobility) handover: In an LTM handover procedure, a source cell may be preconfigured with a candidate cell.

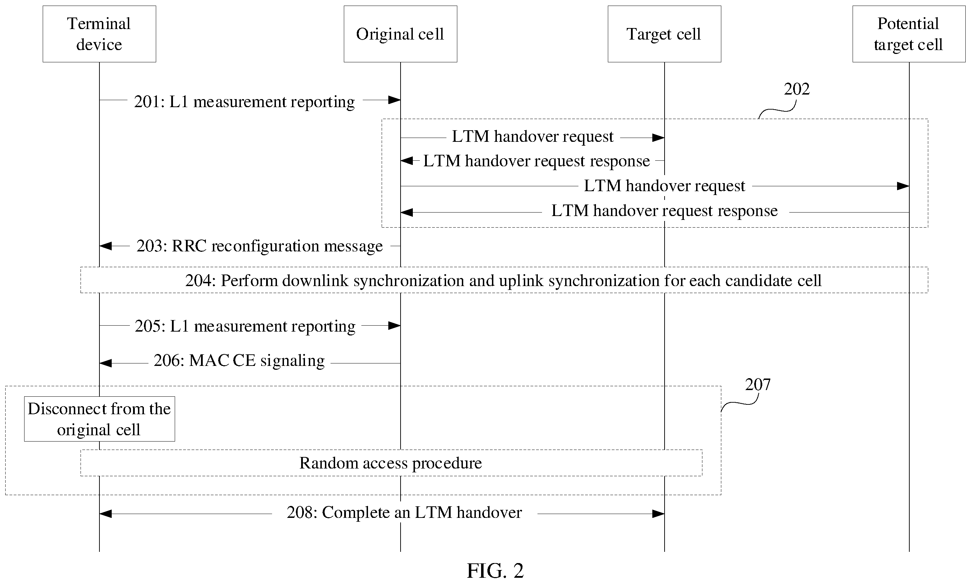

FIG. 2 is a diagram of signaling interaction of an LTM handover procedure. In step 201, a terminal device may perform layer (Layer, L) measurement reporting based on a configured candidate cell. The performing layer measurement reporting may include any type of layer measurement reporting, for example, layer 1 measurement reporting, layer 2 measurement reporting, or layer 3 measurement reporting. In this application, layer 3 measurement reporting is used for description. However, in actual applications, a method for performing layer measurement reporting is not limited.

The candidate cell may be all neighboring cells that can be accessed by the terminal device. After receiving L3 measurement reporting from the terminal device, an original network element decides to perform an LTM cell change. In step 202, an original cell may send an LTM handover request to a target cell and a potential target cell in the candidate cells when performing an LTM cell change. The target cell and the potential target cell may respond to the LTM handover request of the original cell. The original cell receives an LTM handover request response. In step 203, the original cell may further send configuration information of the target cell and configuration information of the potential target cell to the terminal device by using an RRC reconfiguration message. In step 204, after receiving configuration information of the candidate cell, the terminal device may separately perform downlink synchronization and uplink synchronization for each candidate cell. In step 205, the original cell performs L3 measurement reporting for the original cell and the candidate cell, determines the target cell, and delivers an LTM handover command to UE in step 206. The LTM handover command may be carried in MAC CE signaling. A MAC CE may include at least the following information: a timing advance (Timing Advance, TA), a transmission configuration indication state (Transmission Configuration Indication state, TCI state) identifier (Identity document, ID), CFRA resource information, and a candidate cell configuration information identifier. In step 207, after receiving the MAC CE, the terminal device may disconnect from the original cell, perform a random access procedure, be connected to the target cell, and perform data transmission by using the target cell. Then, in step 208, it is determined that an LTM cell handover is completed.

It should be further understood that a network element of the original cell and a network element of the target cell may be a same network element. In other words, the original cell and the target cell may be co-located. In this case, for a specific terminal device, a key corresponding to the target cell and a key corresponding to the original cell may be the same.

It should be further understood that the foregoing handover message and the foregoing RRC message indicating a handover are described from different perspectives. The handover message is described from a perspective of a function, and is intended to indicate that the message is used to indicate the terminal device to perform a handover. The RRC message is described from a perspective of a message type, and is intended to indicate that the message is higher layer signaling. The RRC reconfiguration message is an example of the RRC messages. In other words, the handover message is delivered to the terminal device by using higher layer signaling.

It should be further understood that the foregoing lists different RRC messages such as an RRC connection reconfiguration message in LTE and an RRC reconfiguration message in NR. These messages are merely examples for ease of understanding, and should not constitute any limitation on this application. This application does not limit a specific name used to indicate the terminal device to send a handover message during a handover procedure.

3. CU-DU architecture: In a 5G radio access network (Radio Access Network, RAN) architecture, functions of a baseband unit (Baseband Unit, BBU) are classified into two functional units: a CU and a DU. The CU is responsible for functions such as a PDCP layer and an RRC layer. The DU is responsible for a physical layer, a MAC layer, and an RLC layer.

Based on a configuration of protocol stack functions, there may be two types of CU-DU architectures: a CU-DU split architecture and a CU-DU integrated architecture. In the CU-DU split architecture, NR protocol stack functions may be dynamically configured and classified. A part of the functions is implemented in the CU, and remaining functions are implemented in the DU. In the CU-DU integrated architecture, logical functions of the CU and the DU are integrated into a same gNB, to implement all protocol stack functions.

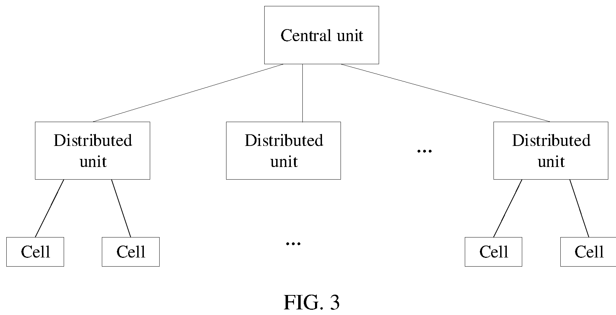

For ease of understanding, FIG. 3 is an example diagram of an architecture of a CU and a DU. As shown in FIG. 3, one CU may be connected to a plurality of DUs, and each DU may provide support for a plurality of cells.

It should be understood that one CU may support a plurality of cells, and a terminal device located in a coverage area of a cell may be connected to the cell.

4. Security: When a terminal device communicates by using a target cell, a key of the terminal device needs to be consistent with a key on a network side. In this way, when data is transmitted between the terminal device and a network device, a key may be used to ensure communication security, and it is ensured that both communication parties can securely share the key.

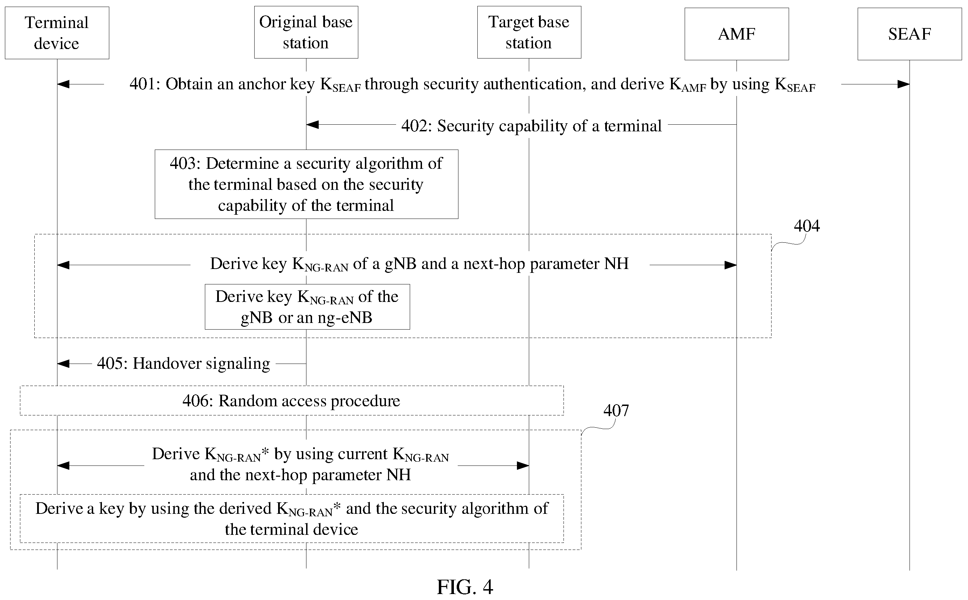

FIG. 4 is a diagram of signaling interaction of a conventional key updating method. As shown in FIG. 4, conventional key synchronization is usually after the terminal device and the network device complete authentication. In step 401, the network device and the terminal device each may obtain an anchor key *K_{SEAF}* through security authentication, and further derive a key *K_{AMF}* by using the anchor key *K_{SEAF}*. The network device may be a base station or a CU. Then, a security context establishment process is initiated. Further, in step 402, an original base station may obtain a security capability of a terminal from an access and mobility management function (Access and Mobility Management Function, AMF). In step 403, the original base station may determine a security algorithm of the terminal based on the security capability of the terminal. In step 404, UE and the AMF may derive key *K_{NG_RAN}* of a gNB or a next-generation eNodeB (Next Generation eNodeB, ng-eNB) and a next-hop parameter NH by using the anchor key *K_{SEAF}*, including deriving key *K_{gNB}* of the gNB. A next hop chaining counter NCC is associated with each key K_{NG-RAN} and the next-hop parameter NH. K_{NG-RAN} corresponds to keys (keys) of two types of access networks. One type is that the gNB serves as an access network, and the other type is that the ng-eNB serves as an access network. The former indicates that a 5G base station accesses a 5G core network, and the latter indicates that an LTE base station accesses the 5G core network.

During key derivation, the UE and the original base station may further derive *K_{NG-RAN}*. Specifically, an initial parameter may be set. To be specific, values of *K*_{NG-RAN} and the NCC may be 0, and an association between *K*_{NG-RAN} and the NCC may be established. In step 405, the original base station may send handover signaling to the terminal device. The handover signaling may indicate the terminal device to perform a cell handover. Specifically, in step 406, the terminal device may access a target base station in a random access manner.

After the handover is completed, in step 407, the UE and the target base station derive *K_{NG-RAN}*∗ by using current *K_{NG_RAN}* and the NH parameter. The original base station derives a target key by using *K_{NG-RAN}*∗ derived by the UE and the target base station and the security algorithm of the terminal device. The target key may include an encryption key and an integrity protection key (K_{RRC-enc} and K_{RRC-int}) for RRC signaling and an encryption key and an integrity key (K_{UP-enc} and K_{UP-int}) for an UP data packet.

It should be understood that derivation of the key is completed by the original base station. When the target cell of the handover is still the original base station, although the cell handover occurs, because the base station does not change, the key of the terminal device and a key of the network device can still be consistent.

It should be further understood that, as mentioned above, one CU or gNB may simultaneously support a plurality of cells. After the terminal device performs the cell handover, if the original cell and the target cell are cells of a same CU or gNB, although the terminal device performs the cell handover, the connected network device does not change actually. In this case, the terminal device and network device can still use the original key. However, if the original cell and the target cell of the cell handover are cells of different CUs or gNBs, a key of a network device corresponding to the target cell and the key of the terminal device need to be consistent, to ensure communication security between the network device after the cell handover and the terminal device.

Based on this, this application provides a communication method, so that after a terminal device changes a serving cell, key consistency between a network element and the terminal device can be ensured even if a network element of a changed target cell is changed.

Therefore, in the technical solution of this application, when determining to perform an inter-network element cell handover, an original cell separately sends indication information to a target network element and the terminal device. The indication information may indicate the target network element and the terminal device to synchronously perform key updating. In this way, it is ensured that a key of the target network element and the key of the terminal device are updated in a timely manner when the inter-network element cell handover is performed, thereby improving key use security in a communication process. In this way, it is ensured that the key of the target network element is consistent with the key of the terminal device, and a network device after the cell handover and the terminal device use respective keys to transmit data or information, thereby improving the security in the communication process.

To facilitate understanding of embodiments of this application, the following descriptions are provided before embodiments of this application are described.
1. In embodiments of this application, the term "indication" may include a direct indication and an indirect indication, or may include an explicit indication and an implicit indication. Information indicated by specific information is referred to as to-be-indicated information. In a specific implementation process, the to-be-indicated information is indicated in a plurality of manners, for example, including but not limited to the following manners: The to-be-indicated information, for example, the to-be-indicated information or an index of the to-be-indicated information, may be directly indicated; or the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, the to-be-indicated information may be further indicated by pre-agreeing on (for example, specifying in a protocol) whether a specific information element exists, to reduce indication overheads to some extent.
2. In embodiments of this application, words such as "first" and "second" are used to distinguish between same items or similar items with basically the same functions and effects. For example, a first chip and a second chip are merely used to distinguish different chips, and are not intended to limit a sequence thereof. A person skilled in the art may understand that the words such as "first" and "second" do not limit a quantity or an execution order, and the words such as "first" and "second" do not define a definite difference.
   "First", "second", and various numbers in the following embodiments are merely used for differentiation for ease of description but are not intended to limit the scope of embodiments of this application. For example, the terms are used to differentiate between different indication information or different time intervals.
3. "Predefinition" or "preconfiguration" may be implemented by pre-storing corresponding code or a table in a device (for example, including a terminal device and a network element); or implemented in another manner that may indicate related information. A specific implementation of "predefinition" or "preconfiguration" is not limited in this application.
4. In embodiments of this application, "protocol" may be a standard protocol in the communication field, and may include, for example, an LTE protocol, an NR protocol, and a related protocol applied to a future communication system. This is not limited in this application.
5. The term "at least one" means one or more, and "a plurality of" means two or more. The term "and/or" describes an association relationship between associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, and c may indicate a, b, c, a and b, a and c, b and c, or a, b, and c. Each of a, b, and c may be in a singular form or a plural form.
6. In embodiments of this application, descriptions such as "when...", "in a case in which ...", "if", and "supposing that" all mean that a device (for example, a terminal device or a network element) performs corresponding processing in an objective situation, do not limit time, do not require that the device (for example, a terminal device or a network element) needs to perform a determining action during implementation, and do not mean that another limitation exists.
7. For ease of describing embodiments of this application, unless otherwise specified, all involved message names are message names in NR. However, it may be understood that these message names are merely examples for ease of understanding, and should not constitute any limitation on this application. This application does not exclude a possibility of defining other message names in a future protocol to replace message names enumerated in this application to implement same or similar functions.
8. The following describes a plurality of embodiments in detail with reference to a plurality of flowcharts. However, it should be understood that related descriptions of these flowcharts and corresponding embodiments of these flowcharts are merely examples for ease of understanding, and should not constitute any limitation on this application. Each step in each flowchart is not necessarily performed. For example, some steps can be skipped. In addition, an execution sequence of the steps is not fixed, and is not limited to that shown in the figure. The execution sequence of the steps should be determined based on functions and internal logic of the steps.

It should be noted that in embodiments of this application, words such as "example" or "for example" are used to represent giving an example, an illustration, or a description. Any embodiment or design solution described as "example" or "for example" in this application should not be construed as being preferred or advantageous over another embodiment or design solution. To be precise, use of the word such as "example" or "for example" is intended to present a relative concept in a specific manner.

The following describes in detail the methods provided in embodiments of this application with reference to the accompanying drawings.

It should be understood that the following is merely for ease of understanding and description. Interaction between a terminal device and a network element is used as an example to describe in detail the method provided in embodiments of this application. However, this should not constitute any limitation on an execution body of the method provided in this application. For example, the terminal device shown in the following embodiments may be replaced with a component (for example, a chip or a circuit) configured in the terminal device. The network element shown in the following embodiments may also be replaced with a component (for example, a chip or a circuit) configured in the network element.

A specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be the terminal device or the network element, or a functional module that can invoke and execute the program in the terminal device or the network element.

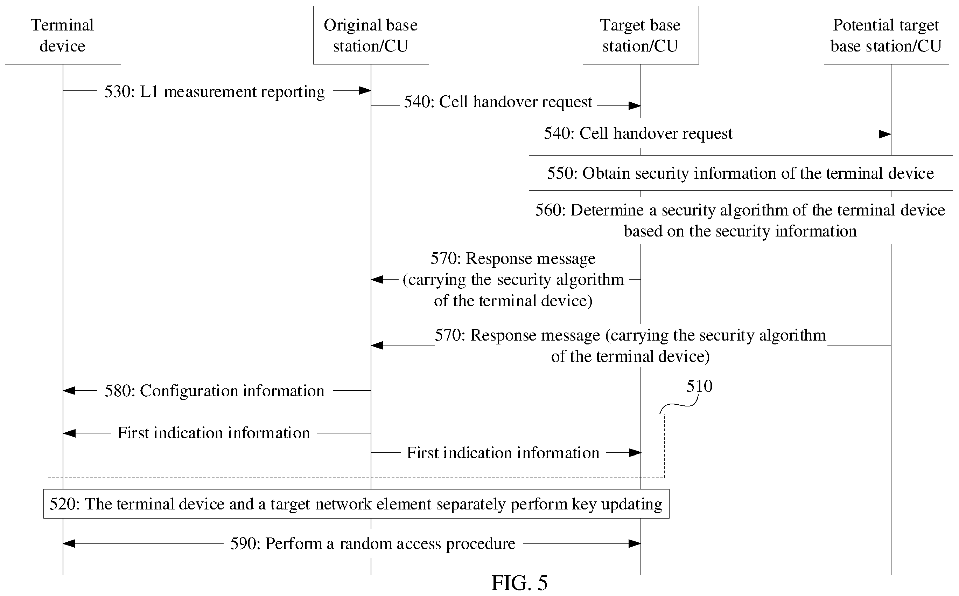

FIG. 5 is a diagram of signaling interaction of a communication method 500 according to an embodiment of this application from a perspective of device interaction. As shown in FIG. 5, the method 500 may include step 510 to step 590. The following describes the steps in the method 500 in detail.

In step 510, an original network element separately sends first indication information to a target network element and a terminal device when performing an inter-network element cell handover. Correspondingly, the target network element may receive the first indication information. The terminal device may receive the first indication information.

The first indication information may be used to indicate the terminal device and the target network element to synchronously perform key updating. The inter-network element cell handover may mean that an original network element in which an original cell from which the terminal device performs a cell handover is located is different from the target network element in which a target cell is located.

As described above, the network element may be a device having a specific transmission function in a network. The network element may include a base station or a CU. Therefore, the original network element in this application may be an original base station or an original CU, and the target network element may be a target base station or a target CU. In addition, the network element may alternatively be a device of another hardware structure or a combination. This application does not limit a specific device type or device composition of the network element.

In an embodiment of this application, a device type of the original network element and a device type of the target network element may be the same. For example, when the original network element is an original base station, the target network element may be a target base station. When the original network element is an original CU, the target network element may be a target CU. A device type of the original network element and a device type of the target network element may be different. For example, when the original network element is an original base station, the target network element may be a target CU. When the original network element is an original CU, the target network element may be a target base station; or when the original network element is an original base station, the target network element may be a target CU.

It should be understood that, before the original network element separately sends the first indication information to the target network element and the terminal device when performing the inter-network element cell handover, the original network element may first trigger the inter-network element cell handover. The original network element may trigger the inter-network element cell handover by receiving a cell handover command or when an L3 measurement result reported by UE meets a cell handover condition. The cell handover command may be sent by the UE to the original network element. The UE may decide, based on a requirement, whether to trigger the cell handover. For example, whether to trigger the cell handover may be decided based on a condition for triggering the cell handover.

That it is determined that the L3 measurement result reported by the UE meets the cell handover condition may specifically include at least one of the following cases:
1. Communication quality of the original network element is lower than preset communication quality. 2. The communication quality of the original network element is lower than communication quality of a candidate cell. 3. A distance between the original network element and the terminal device is greater than a distance between the candidate cell and the terminal device, and the like. A specific implementation in which the cell handover condition is met is merely an example, and should not constitute a specific limitation on triggering of the cell handover. This is not excessively limited in this application.

In this application, a handover scenario of the inter-network element cell handover may be any cell handover scenario, for example, may be an LTM cell handover, namely, an inter-network element LTM cell handover. The original network element separately sends the first indication information to the target network element and the terminal device when performing the inter-network element LTM cell handover. The first indication information may indicate the terminal device and the target network element to synchronously perform key updating.

It should be understood that the listed cell handover manners in an LTM mechanism are merely examples, and should not constitute any limitation on this application. This application does not limit a specific manner in which a network device performs the cell handover.

In this embodiment, that the original network element sends the first indication information to the target network element and the terminal device UE may include: The original network element sends the first indication information to the target network element, and the original network element sends the first indication information to the UE. Specifically, the original network element may send the first indication information to the target network element at a first moment, and the original network element may send the indication information to the UE at a second moment. The first moment and the second moment may be the same or different. The first moment may be before the second moment, or the first moment may be after the second moment.

It should be understood that the original network element may send the first indication information to the target network element through a beam corresponding to the target network element. The original network element may further send the first indication information to the UE through a beam corresponding to the terminal device. A representation of a beam in an NR protocol may be represented as a spatial domain filter (spatial filter), or referred to as a spatial filter (spatial filter) or a spatial parameter (spatial parameters). A beam used to send a signal may be referred to as a transmit beam (transmission beam, Tx beam), which may be referred to as a spatial transmit filter (spatial domain transmit filter) or a spatial transmit parameter (spatial domain transmit parameter). A beam used to receive a signal may be referred to as a receive beam (reception beam, Rx beam), which may be referred to as a spatial receive filter (spatial domain receive filter) or a spatial receive parameter (spatial domain receive parameter).

Based on different transmission directions, beams may be classified into a transmit beam and a receive beam. The transmit beam may be a signal strength distribution formed in different directions in space after signals are transmitted through antennas, and the receive beam may be a signal strength distribution, in different directions in space, of wireless signals received through antennas.

It should be understood that the representation of the beam in the NR protocol is merely an example, and should not constitute any limitation on this application. This application does not exclude a possibility of defining other terms in future protocols to mean same or similar meanings.

In this embodiment, after the terminal device and the target network element separately receive the first indication information, in step 520, the terminal device and the target network element may synchronously perform key updating.

It should be understood that synchronization in that the terminal device and the target terminal synchronously perform key updating may include that the terminal device and the target network element apply an updated key at a same time; or may include that a time at which the terminal device performs key updating is the same as a time at which the target network element performs key updating; or may include that the terminal device and the target network element respectively perform key updating at different times but the terminal device and the target network element apply an updated key at a same time.

For example, the terminal device may perform key updating at a third time, and the target network element may perform key updating at a fourth time. A first time interval may exist between the third time and the fourth time, and the first time interval may include, for example, one or more slots (slots).

Therefore, to synchronize application times of the terminal device and the target network element, after the terminal device is handed over to the target cell of the target network element, the terminal device may send a communication status to the target network element. The communication status may indicate that the target network element starts to apply the updated key. After sending the communication status to the target network element, the terminal device may determine to use the updated key.

It should be understood that, the inter-network element cell handover may mean that the original network element in which the original cell from which the terminal device performs the cell handover is located is different from the target network element in which the target cell is located. That the original network element is different from the target network element may mean that the original network element and the target network element are different devices. For example, the network element is a CU, and the inter-network element cell handover may be an inter-CU cell handover, namely, a handover from an original cell of an original CU to a target cell of a target CU.

In this embodiment, when the inter-network element cell handover is performed, the first indication information may indicate the terminal device and the target network element to separately perform key updating, and the terminal device and the target network element simultaneously perform key updating, so that the key of the terminal device and the key of the target network element are consistent, thereby ensuring security of communication between the terminal device and the target network element.

Optionally, that the original network element separately sends the first indication information to the target network element and the terminal device may include: The original network element separately sends MAC CE signaling to the terminal device and the target network element, where the MAC CE signaling may carry the first indication information; or the original network element separately sends dedicated signaling to the terminal device and the target network element, where the dedicated signaling may carry the first indication information. Correspondingly, the terminal device may receive the MAC CE signaling, and read the first indication information from the MAC CE signaling. The target network element may receive the MAC CE signaling, and read the first indication information from the MAC CE signaling.

As described above, the first indication information may be carried in the MAC CE signaling or the dedicated signaling. The first indication information is transmitted through original MAC CE signaling, so that communication resources can be saved. The dedicated signaling may be signaling that is set for transmitting indication information. Setting the dedicated signaling to carry the first indication information may enable more abundant information exchange manners between UE and a network element, so that the original cell quickly indicates the first indication information of the target network element and the terminal device.

The first indication information may explicitly indicate the terminal device and the target network element to separately perform key updating. For example, an indication is performed by using a predefined field in the MAC CE signaling. In this case, the first indication information may be a predefined field in the MAC CE signaling. The predefined field may be an original field or a newly defined field in the MAC CE signaling. This is not excessively limited in this application.

Alternatively, the first indication information may implicitly indicate the terminal device and the target network element to separately perform key updating. For example, the MAC CE signaling may include a parameter used for key updating, for example, a parameter such as a next hop chaining counter NCC and algorithm indication information. When receiving the MAC CE signaling, the terminal device may determine, based on the foregoing parameters included in the MAC CE signaling, to initiate key updating.

Optionally, the MAC CE signaling may be transmitted between the terminal device and the network element through a physical uplink shared channel (Physical Uplink Shared Channel, PUSCH) or a physical downlink shared channel (Physical Downlink Shared Channel, PDSCH).

As described above, the terminal device and the target network element need to separately perform key updating, and a key updating process involves many parameters. In this embodiment, the first indication information may include at least one of the following: a next hop chaining counter NCC and algorithm indication information.

The next hop chaining counter (NCC, next hop chaining counter) is a parameter used for key derivation. A security algorithm may be an algorithm used for key derivation. For example, a KDF (Key derivation function, key derivation function) algorithm may be included. In addition, the first indication information may further include another parameter, for example, may include a key KgNB, so that the terminal device and the target network element use a same key.

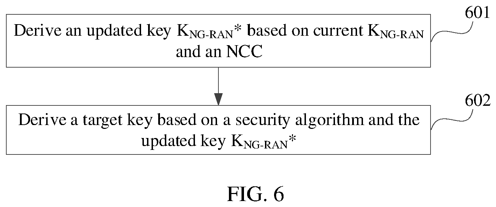

It should be understood that the first indication information may include at least one of an NCC and algorithm indication information. When the first indication information explicitly indicates that the terminal device and the target device need to perform key updating, the first indication information may indicate, by using a part of fields, that key updating needs to be performed, or may further carry, by using another part of the fields, the NCC and the algorithm indication information. When the first indication information implicitly indicates that the terminal device and the target device need to perform key updating, fields of the first indication information may be the NCC and the algorithm indication information. For an application of the NCC and the algorithm indication information in the key updating process, refer to the embodiment shown in FIG. 6.

For ease of understanding, FIG. 6 is a schematic flowchart of a key updating method according to an embodiment of the present disclosure. As shown in FIG. 6, the key updating method in the present disclosure may be configured on a terminal device and a target network element. The method 600 may include step 601 and step 602. The following describes the steps in the method 600 in detail.

Step 601: Derive an updated key *K_{NG-RAN}** based on current *K_{NG_RAN}* and the NCC.

Step 602: Derive a target key based on the security algorithm and the updated key *K_{NG-RAN}**, where the target key may include KRRC-enc (encryption key for RRC signaling), KRRC-int (integrity protection key for the RRC signaling), KUP-enc (encryption key for an UP (upload, uplink) data packet), and KUP-int (integrity protection key for the UP data packet).

Optionally, the security algorithm may include an integrity protection algorithm and an encryption algorithm.

Specifically, step 602 may include: deriving KRRC-int and KUP-int based on the integrity protection algorithm and the updated key *K_{NG-RAN}**. KRRC-enc and KUP-enc are derived based on the encryption algorithm and the updated key *K_{NG-RAN}**.

The current *K_{NG_RAN}* in step 601 may be an initial key before the terminal device or the target network element performs key updating, or a latest key stored in the terminal device or the target network element, and the latest key needs to be updated. The terminal device and the target network element may store the latest *K_{NG-RAN}.* After key updating, the terminal device and the target network element may delete an original key.

At an early stage of key derivation, an NH parameter may be set to 0, and the NH parameter may be related to the key *K_{NG-RAN}* and the NCC. The NH parameter is a key derived by an ME and an AMF, and may be used to provide forward security, so that the key *K_{NG-RAN}* and the NCC may be initialized.

It should be understood that the algorithm indication information may be used to determine a security algorithm that participates in the key updating process. Both the terminal device and the target network element may determine, based on the algorithm indication information, the security algorithm used in the key updating process.

In a possible design, the algorithm indication information may be at least one of the following: indication information indicating whether to use an original security algorithm; whether to execute an integrity protection algorithm and/or an encryption algorithm; and an algorithm index.

The original security algorithm is a security algorithm configured on the terminal device, and each security algorithm may be associated with at least one candidate cell. A network element corresponding to a candidate cell associated with a specific security algorithm may use the security algorithm to perform key updating.

The security algorithm may include the integrity protection algorithm and/or the encryption algorithm. The integrity protection algorithm may be used to derive KRRC-int and KUP-int. The encryption algorithm may be used to derive KRRC-enc and KUP-enc.

The algorithm index is an identifier used to query the security algorithm. For example, the security algorithm may be stored in a form of a table, each security algorithm may be associated with an index, and a corresponding security algorithm may be found by using the index.

According to the communication method provided in this embodiment, the first indication information may be provided to the terminal device and the target network element by using the MAC CE signaling, and the first indication information may include the NCC and the algorithm indication information that are used in the key updating process, thereby synchronizing parameters involved in the key updating process, and ensuring that the updated key of the terminal device is consistent with the updated key of the target network element. In this process, no key needs to be transmitted. This prevents a new key from being obtained by an attacker during transmission and enhances network security.

In the following, several different combinations included in the algorithm indication information are used as examples to describe how to perform key updating based on the first indication information.

1. The algorithm indication information includes the indication information indicating whether to use the original security algorithm.

It should be understood that a predefined field in the algorithm indication information may carry the indication information indicating whether to use the security algorithm. For example, the predefined field is a first value or a second value. The first value or the second value may be other information such as a predefined number, letter, or symbol. This is not limited in this application.

The first value may be indication information indicating to use the original security algorithm, and the second value is indication information indicating not to use the security algorithm. Alternatively, the second value may be indication information indicating to use the security algorithm, and the first value is indication information indicating not to use the security algorithm. This is not limited in this application.

For example, if a value of the predefined field in the algorithm indication information is 1, it indicates the indication information indicating to use the security algorithm; or if a value of the predefined field is 0, it indicates the indication information indicating not to use the security algorithm.

In addition, the algorithm indication information may also implicitly indicate the indication information indicating whether to use the security algorithm. For example, the algorithm indication information may be information such as an algorithm name, an algorithm identifier, and an algorithm index, and the indication information may be used to indicate to use the security algorithm. However, if the algorithm indication information is not information such as the algorithm name, the algorithm identifier, or the algorithm index, but is information unrelated to the original security algorithm, for example, NULL or algorithm information of a new security algorithm, it may indicate the indication information indicating not to use the original security algorithm.

It should be understood that, if the algorithm indication information indicates the indication information indicating to use the original security algorithm, key updating may be performed based on the original security algorithm. If the algorithm indication information indicates the indication information indicating not to use the original security algorithm, key updating may be performed based on a default security algorithm. The default security algorithm may be a security algorithm preset by both the terminal device and the target network element. A default security algorithm of the terminal device is the same as a default security algorithm of the target network element.

The original security algorithm may be a security algorithm configured on the terminal device, for example, may be a security algorithm of a configured candidate cell.

2. The algorithm indication information includes whether to execute the integrity protection algorithm and/or the encryption algorithm.

It should be understood that another predefined field in the algorithm indication information may be used to indicate whether to execute the integrity protection algorithm and/or the encryption algorithm. A plurality of values of the predefined field may be set, for example, are respectively a value 1, a value 2, a value 3, or a value 4. For example, the value 1 may indicate to execute the integrity protection algorithm. The value 2 may indicate to execute the encryption algorithm. The value 3 may indicate to execute the integrity protection algorithm and the encryption algorithm. The value 4 may indicate not to execute the integrity protection algorithm and not to execute the encryption algorithm. A character length of the predefined field may be set based on a use requirement. For example, two characters may be set. The value 1 may be 01, the value 2 may be 10, the value 3 may be 11, and the value 4 may be 00. Certainly, the foregoing manner is merely an example. This is not limited in this application. It should be understood that if the algorithm indication information indicates to execute the integrity protection algorithm and the encryption algorithm, it is determined that the integrity protection algorithm and the encryption algorithm participate in key updating. If the algorithm indication information indicates to execute the integrity protection algorithm, it is determined that the integrity protection algorithm participates in key updating. If the algorithm indication information indicates to execute the encryption algorithm, it is determined that the encryption algorithm participates in key updating.

3. The algorithm indication information includes the algorithm index.

It should be understood that, if the algorithm indication information includes the algorithm index, an algorithm corresponding to the index may be directly determined as a security algorithm that participates in key updating. The algorithm indication information may carry the algorithm index by using a predefined field. For example, a value of the field is the algorithm index.

4. The algorithm indication information includes: the indication information indicating whether to use the original security algorithm, and whether to execute the integrity protection algorithm and/or the encryption algorithm.

It should be understood that, if the algorithm indication information indicates indication information indicating to use the original security algorithm, an algorithm that finally participates in key updating may be determined with reference to whether to execute the integrity protection algorithm and/or the encryption algorithm. In other words, if the algorithm indication information includes the indication information indicating to use the original security algorithm, and also indicates to executes the integrity protection algorithm, it may be determined that the integrity protection algorithm is an algorithm that participates in key updating. If the algorithm indication information includes the indication information indicating to use the original security algorithm, and also indicates to execute the encryption algorithm, it may be determined that the encryption algorithm is an algorithm that participates in key updating. If the algorithm indication information includes the indication information indicating to use the original security algorithm, and also indicates to execute the integrity protection algorithm and the encryption algorithm, it may be determined that both the integrity protection algorithm and the encryption algorithm participate in key updating.

In addition, if the algorithm indication information includes indication information indicating not to use the original security algorithm, an algorithm that finally participates in key updating may be further determined based on whether to execute the integrity protection algorithm and/or the encryption algorithm. In other words, if the algorithm indication information indicates to execute the integrity protection algorithm and/or the encryption algorithm, it is determined that the integrity protection algorithm and/or a default encryption algorithm participate in key updating.

5. The algorithm indication information includes the indication information indicating whether to use the original security algorithm, and an algorithm index.

It should be understood that, if the algorithm indication information includes indication information indicating to use the original security algorithm, and the algorithm index, whether the original security algorithm is the same as an algorithm corresponding to the index may be first determined, and if the original security algorithm is the same as the algorithm corresponding to the index, the original security algorithm is directly used; or if the original security algorithm is different from the algorithm corresponding to the index, the original security algorithm may be selected to perform key updating, or the algorithm corresponding to the algorithm index is used to perform key updating.

It should be further understood that, if the algorithm indication information includes not using the original security algorithm and the algorithm index, an algorithm corresponding to the algorithm index may be directly used to perform key updating.

6. The algorithm indication information includes: indication information indicating whether to use the original security algorithm, whether to execute the integrity protection algorithm and/or the encryption algorithm, and the algorithm index.

It should be understood that, when the algorithm indication information includes the indication information indicating whether to use the original security algorithm, whether to execute the integrity protection algorithm and/or the encryption algorithm, and the algorithm index, a priority may be set for the foregoing information. For example, a priority of the indication information indicating whether to use the original security algorithm is higher than a priority of whether to execute the integrity protection algorithm and/or the encryption algorithm, and the priority of whether to execute the integrity protection algorithm and/or the encryption algorithm is higher than a priority of the algorithm index. Certainly, the priorities are merely set an example, and should not constitute a specific limitation.

It should be understood that, if the algorithm indication information includes indication information indicating to use the original security algorithm, executing the integrity protection algorithm and/or the encryption algorithm, and the algorithm index, the original security algorithm, the to-be-executed integrity protection algorithm and/or encryption algorithm, and an algorithm corresponding to the algorithm index may be first determined, and participate in key updating. If algorithms participating in key updating are repeated, one algorithm may be randomly selected for use or a latest algorithm may be selected.

In this embodiment of this application, the security algorithm is involved in a process in which the terminal device and the target network element synchronously perform key updating. In actual applications, there may be a plurality of security algorithms, for example, including but not limited to an AS integrity protection algorithm and an AS encryption algorithm. A specific type or category of the security algorithm is not limited in this embodiment. For the plurality of security algorithms, to improve adaptability between the terminal device and the security algorithm, so that the security algorithm can normally run on the terminal device, the security algorithm may be selected for the terminal device based on security information of the terminal device. In addition, to enable the terminal device and the target network element to use a same security algorithm, to ensure key consistency, the target network element may select the security algorithm of the terminal device, and then configure, on the terminal device, the security algorithm selected for the terminal device.

Before the inter-network element cell handover is performed, the method 500 further includes: In step 530, in the LTM mechanism, the terminal device may perform layer 3 measurement reporting to the original network element. Correspondingly, the original network element may receive a layer 3 measurement reporting result reported by the terminal device, and trigger a change of a serving cell of the UE based on the layer 3 measurement reporting result. The original network element may start the inter-network element cell handover.

It should be understood that the original network element may determine, based on a preset handover condition, that the inter-network element cell handover may be started. The handover condition may include, for example, that communication quality of the candidate cell meets a preset quality threshold. The candidate cell may serve as the target cell. The original network element initiates a cell handover request to the target cell and/or initiates a cell handover request to a potential target cell. Further, the original network element may further determine to initiate the inter-network element cell handover request when the target network element in which the target cell is located is different from the original network element.

Optionally, the original network element may perform cell sorting based on communication quality of each candidate cell or perform cell selection based on a quality threshold, to obtain top N candidate cells with highest communication quality, where N is a positive integer greater than or equal to 1. The top N candidate cells with highest communication quality may include the target cell and the potential target cell. For example, a candidate cell with highest communication quality may serve as the target cell, and the remaining N-1 candidate cells may serve as potential target cells.

After starting the inter-network element cell handover, in step 540, the original network element may send the cell handover request to the candidate network element. Correspondingly, the candidate network element may receive the cell handover request. Candidate network elements may include the target network element and a potential target network element. In other words, the target network element may receive the cell handover request. The potential target network element may receive the cell handover request. Certainly, the candidate network element may further include another network element. This is not excessively limited in this embodiment.

After the target network element receives the cell handover request, if the target network element determines that the terminal device may be connected to a covered cell, the target network element may send a response message of the cell handover request to the original network element. After the potential target network element receives the cell handover request, if the potential target network element determines that the terminal device may be connected to a covered cell, the potential target network element may also send a response message of the cell handover request to the original network element.

It should be understood that the cell handover request may include parameters required for performing the cell handover, for example, may include information about the target cell (for example, a physical cell identifier (physical cell identifier, PCI) of the target cell), and frequency information corresponding to the target cell.

Optionally, after the candidate network element receives the cell handover request sent by the original network element, in step 550, the candidate network element may obtain the security information of the terminal device.

As described above, the candidate network element may trigger obtaining of the security information of the terminal device based on the cell handover request. Further, the candidate network element may obtain the security information in the cell handover request in response to the cell handover request.

In a possible design, the cell handover request may further carry the security information of the terminal device. The security information of the terminal device is transmitted to the target network element and the potential target network element by using the cell handover request.

Optionally, the target network element or the potential target network element may obtain the security information of the terminal device, and determine the security algorithm of the terminal device based on the security information of the terminal device. A mapping relationship between the security information of the terminal device and the security algorithm of the terminal device is established, so that the security algorithm used by the terminal device is the same as a security algorithm used by the target network element or the potential target network element, thereby ensuring that a key updating process of the terminal device is consistent with a key updating process of the target network element or the potential target network element, and obtaining a same key.

In another possible design, the security information of the terminal device may alternatively be provided by a core network element to the candidate network element. After receiving the cell handover request, the candidate network element may send an obtaining request to the core network element. The obtaining request may indicate the core network element to send the security information of the terminal to the candidate network element. The core network element may be, for example, an AMF, a session management function network element (Session Management Function, SMF), or a user plane function (User Plane Function, UPF) network element.

Optionally, the security information of the terminal device may include at least one of the following:
a security capability of the terminal device, a security level of the terminal device, and a security attribute of the terminal device.

It should be understood that the security capability of the terminal device may include a hardware security capability and a software security capability of the terminal device. The hardware security capability of the terminal device may be a network risk resistance capability that can be provided by hardware of the terminal device. The software security capability of the terminal device may refer to a risk resistance capability that can be provided by software of the terminal device.

It should be understood that the security level of the terminal device may be a security level that is set based on security of the terminal device. For example, the security level of the terminal device may include two categories: a basic level and an enhanced level. For another example, the security level of the terminal device may include a plurality of levels such as a first security level, a second security level, and a third security level. Each level represents different security performance or a different security capability.

For example, the security levels that are the first security level, the second security level, and the third security level may be arranged in descending order or in ascending order. Certainly, in this embodiment, division of the security level of the terminal device is merely an example, and does not constitute a detailed limitation. In this embodiment of this application, division in terms of a quantity and a sequence of security levels is not excessively limited.

It should be understood that the security attribute of the terminal device may be a feature that is set to protect the security of the terminal device, for example, may include attributes such as confidentiality, integrity, availability, and credibility. If the security attribute of the terminal device has higher strength and there are richer security attributes, the security capability of the terminal device is stronger; on the contrary, if the security attribute of the terminal device has lower strength and there are rarer security attributes, the security capability of the terminal device is weaker. Certainly, the security attribute of the terminal device may further include another feature, and specific content of the security attribute of the terminal device is not excessively limited in this embodiment.

In this embodiment of this application, at least one of the security capability of the terminal device, the security level of the terminal device, and the security attribute of the terminal device is used as the security information of the terminal device, so that specific meanings of the security information of the terminal device are richer. Therefore, a more accurate security algorithm of the terminal device can be obtained based on the security information of the terminal device.

To determine the security algorithm of the terminal device, in step 560, the candidate network element may determine the security algorithm of the terminal device based on the security information.

It should be understood that a mapping relationship or a mapping table may be preset for the security information and the security algorithm. That the candidate network element determines the security algorithm of the terminal device based on the security information of the terminal device may specifically include: The candidate network element determines, based on the mapping relationship or the mapping table, a security algorithm that has a mapping relationship with the security information of the terminal device, and further uses the security algorithm as the security algorithm of the terminal device.

It should be understood that the preset mapping relationship between the security information and the security algorithm may be an algorithm solving model or formula corresponding to the security information and the security algorithm. The security algorithm corresponding to the security information may be obtained through solving based on the algorithm solving model or formula. For example, an input of the mapping formula may be a feature of the security information, and an output may be a decided security algorithm. The security algorithm solving model may be, for example, an artificial intelligence model. The formula may be a mapping formula of a local mapping calculation function. The security algorithm corresponding to the security information may be obtained through solving based on the formula. Certainly, the foregoing mapping relationship is merely an example, and does not constitute a specific limitation.

It should be understood that the preset mapping table between the security information and the security algorithm may be a table including a correspondence between the security information and the security algorithm. A row in the table may be one piece of security information and a security algorithm corresponding to the security information, or a security information set and a corresponding security algorithm set.

In this embodiment of this application, the preset mapping relationship or the mapping table between the security information and the security algorithm may include at least one of the following:
each piece of security information and a correspondingly specified security algorithm; each piece of security information and a correspondingly specified algorithm set, where the algorithm set may include a plurality of security algorithms, and may specifically include algorithm indexes respectively corresponding to the plurality of security algorithms; a security information set and a correspondingly specified security algorithm; and a security information set and a correspondingly specified algorithm set, where the security information set includes a plurality of types of security information, and may specifically include information identifiers or information names respectively corresponding to the plurality of types of security information, and the algorithm set may include a plurality of security algorithms, and may specifically include algorithm indexes respectively corresponding to the plurality of security algorithms.

It can be learned from the foregoing descriptions that, each network element may correspond to one or more cells, and the network element may associate each cell or cell set of the network element with the security algorithm of the terminal device. In this way, a use association may be established between the security algorithm of the terminal device and the cell, so that a security algorithm corresponding to the target cell can be obtained in a cell handover process. Therefore, in step 570, the candidate network element may send the security algorithm determined for the terminal device to the original network element. Correspondingly, the original network element may receive the security algorithm, of the terminal device, sent by the candidate network element.

It should be understood that, that the candidate network element sends the security algorithm of the terminal device to the original network element may include: sending the security algorithm of the terminal device to the original network element by using the response message of the handover request. In other words, when the candidate network element sends the security algorithm of the terminal device to the original network element, a handover request response message may be used to carry the security algorithm of the terminal device.

The handover request response message may include a parameter required for determining to perform a cell handover of the terminal device, for example, may include information such as information about the target cell, a response result, and a time. In addition, the handover request response message may further include another parameter, for example, the security algorithm determined by the candidate network element for the terminal device.

It should be understood that the original network element may receive a security algorithm, of the terminal device, sent by one or more candidate network elements. The candidate network elements may include the target network element and the potential target network element. The original network element may be further configured to determine configuration information based on a security algorithm, of the terminal device, separately sent by at least one candidate network element. Specifically, the security algorithm, of the terminal device, separately sent by the at least one candidate network element may be combined to obtain the configuration information.

To enable the terminal device to synchronize a correspondence between each cell and a corresponding security algorithm, in step 580, the original network element may send the configuration information to the terminal device. The configuration information may be used to configure a correspondence between the candidate cell and the security algorithm of the terminal device.

Specifically, a correspondence between a covered candidate cell and the security algorithm determined by the candidate network element for the terminal device; or each candidate cell is configured with a security algorithm set, and each algorithm in the set is identified by using an algorithm index; and/or the configuration information is used to indicate the terminal device to configure a correspondence between a cell set covered by the candidate network element and the security algorithm determined by the candidate network element for the terminal device, and the security algorithm of the terminal device is determined based on the security information of the terminal device.

In actual applications, when the original network element sends the configuration information to the terminal device, various messages or signaling specified in a protocol may be used to carry the configuration information. For example, the configuration information may be carried in an RRC reconfiguration message or be carried in media access control-control element MAC CE signaling or dedicated signaling.

In an implementation, the original network element may send the RRC reconfiguration message to the terminal device. The RRC reconfiguration message may carry the configuration information. Specifically, the original network element may send the RRC reconfiguration message to the terminal device when the original network element is in an RRC connection to the terminal device.

Correspondingly, after receiving the RRC reconfiguration message, the terminal device may configure the security algorithm of the terminal device based on the configuration information carried in the RRC reconfiguration message.

It should be understood that the configuration information may be carried in a predefined field in an RRC message. The configuration information may be set in a predefined field in the RRC signaling. In addition to carrying the configuration information, the RRC message may further include a parameter that is configured by the target network element for the terminal device and that is required for being connected to the target cell, for example, may include information about the target cell (for example, a physical cell identifier (physical cell identifier, PCI) of the target cell, frequency information corresponding to the target cell, and resource information (for example, a dedicated random access channel (Random Access Channel, RACH) resource and/or a common RACH resource) allocated by the target network element to the terminal device).

Optionally, after configuring the security algorithm of the terminal device based on the configuration information carried in the RRC reconfiguration message, the terminal device may further send an RRC reconfiguration complete message to the original network element based on the foregoing parameters. The RRC reconfiguration complete message may notify the original network element that a resource configuration of the target cell has been completed. It should be noted that, in some embodiments of this application, there is a description that the terminal device may feed back the RRC reconfiguration complete message to the network element, but the feedback step may be unnecessary. For example, the first network element may start sending of the first indication information without receiving the RRC reconfiguration complete message. For another example, the first network element may start a predefined timer after sending the RRC message, and may start sending of the first indication information when timing of the timer ends. A type and duration of the timer are not limited.

In this embodiment, sending the configuration information to the terminal device by using the RRC message and using existing signaling for transmission can avoid unnecessary channel overheads, save communication resources, implement flexible and efficient information transmission, and improve service performance.

In another implementation, the original network element may send the media access control-control element MAC CE signaling to the terminal device. The MAC CE signaling carries the configuration information. Correspondingly, the terminal device may receive the MAC CE, and configure the security algorithm based on the configuration information carried in the MAC CE signaling.

In this embodiment, the configuration information is sent to the terminal device by using the MAC CE signaling, so that a quantity of signaling transmissions can be reduced, and the cell handover command and the configuration information related to the cell handover are simultaneously transmitted to the terminal device, thereby improving transmission efficiency and implementing more flexible cell adjustment.

It should be understood that the MAC CE signaling may carry the configuration information by using a predefined field.

In still another implementation, the original network element may send the dedicated signaling to the terminal device. The dedicated signaling may carry the configuration information. Correspondingly, the terminal device may receive the dedicated signaling, and configure the security algorithm based on the configuration information carried in the dedicated signaling.

It should be understood that the dedicated signaling may be preconfigured signaling used to transmit information between the terminal device and the original network element. A specific signaling structure of the dedicated signaling is not excessively limited in this embodiment.

In this embodiment, because the dedicated signaling has higher transmission efficiency and higher flexibility, transmitting the configuration information for the terminal device by using the dedicated signaling may improve transmission efficiency and transmission security of the configuration information.

In the communication method provided in this embodiment, a security algorithm determined by each candidate network element for the terminal device may be configured on the terminal device by using configuration information, so that the security algorithm of the terminal device is the same as the security algorithm of each candidate network element. Therefore, when both the terminal device and the target network element perform key updating, a same security algorithm is used to ensure that a key updating process of the terminal device is consistent with a key updating process of the target network element, so that the updated key of the terminal device is consistent with the updated key of the target network element, to effectively ensure communication security between the terminal device and the target network element.

As described above, the configuration information may configure the correspondence between the candidate cell and the security algorithm of the terminal device. The following lists several possible forms of the configuration information.
1. Each candidate cell and one security algorithm correspondingly configured for the terminal device.
   It should be understood that there may be a correspondence between the candidate cell and the security algorithm of the terminal device. To be specific, each candidate cell may have a mapping relationship with one security algorithm of the terminal device, and the mapping relationship may reflect an association relationship between the candidate cell, the terminal device, and the security algorithm.
2. Each candidate cell and one security algorithm set correspondingly configured for the terminal device, where the security algorithm set includes a plurality of security algorithms.

It should be understood that each candidate cell may have a correspondence with one security algorithm set of the terminal device. To be specific, each candidate cell may have a mapping relationship with one security algorithm set of the terminal device, and the mapping relationship may reflect an association relationship between the candidate cell, the terminal device, and the security algorithm set.

Optionally, the security algorithm set may include algorithm indexes respectively corresponding to the plurality of security algorithms. One security algorithm may include one or more algorithms, and one combination of the one or more algorithms may be referred to as one security algorithm. For example, a combination of the integrity protection algorithm and the encryption algorithm may be referred to as one security algorithm, the integrity protection algorithm alone may also be referred to as one security algorithm, and the encryption algorithm alone may also be referred to as one security algorithm.

3. Each candidate cell set/group and one security algorithm correspondingly configured for the terminal device.

It should be understood that each candidate cell set/group may include one or more candidate cells, and may specifically include information about the one or more candidate cells. For example, the information may include at least one of the following: a physical cell identifier, a cell identifier, and a cell name of the candidate cell, and the like. Each candidate cell set/group may have a mapping relationship with one security algorithm of one terminal device. In other words, any candidate cell in each candidate cell set/group uses one security algorithm of the terminal device.

4. Each candidate cell set/group and one security algorithm set correspondingly configured for the terminal device, where the security algorithm set includes a plurality of security algorithms.

It should be understood that any candidate cell in each candidate cell set/group may use one security algorithm set correspondingly configured for the terminal device. In other words, the candidate cell may perform key updating by using any security algorithm in the security algorithm set.

Further, the candidate cell and the terminal device may separately select a target security algorithm in the algorithm security set based on a same algorithm selection policy, and further, both the candidate cell and the terminal device may perform key updating by using the target security algorithm. The algorithm selection policy may be preset. For example, algorithm selection may be performed based on parameters such as calculation complexity and a calculation time of the security algorithm.

In the foregoing embodiment, after the target base station and the terminal device may separately perform key updating under an indication of the first indication information in step 520, the method may further include: In step 590, the terminal device initiates a random access procedure to the target network element.

In this embodiment, for a random access procedure between the terminal device and the target cell, refer to the conventional technology. For brevity, details are not described herein again.

The following describes in detail the technical solutions of the present disclosure by using an LTM mechanism as a handover mechanism during a cell handover and with reference to two security information obtaining manners used in a cell handover process.

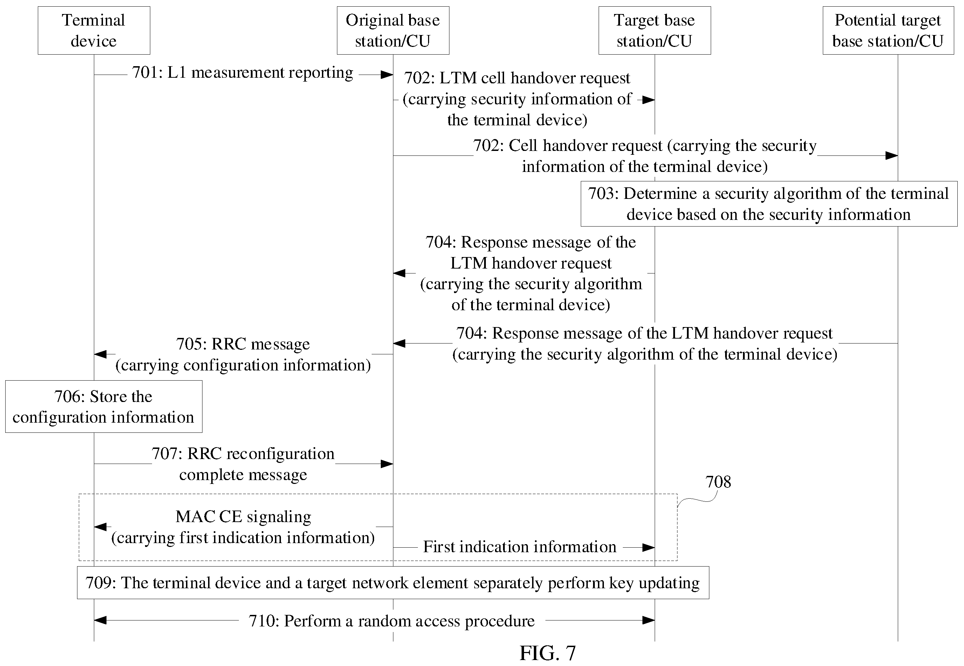

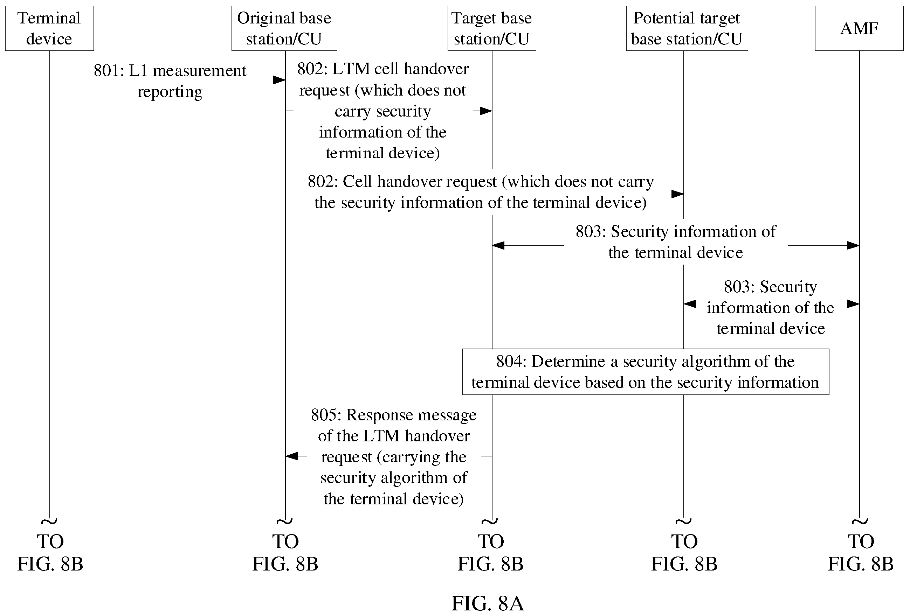

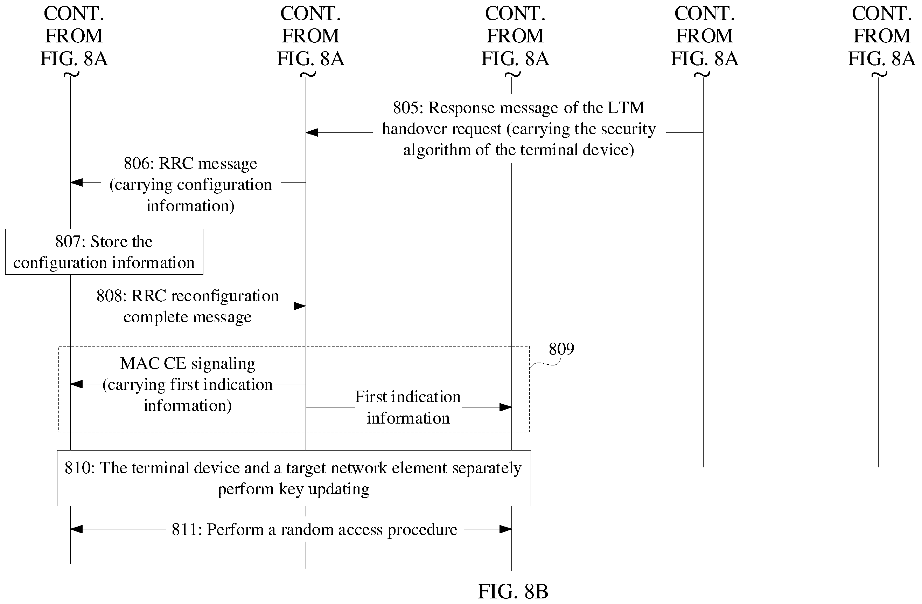

This application provides two obtaining manners in which a candidate network element obtains security of a terminal device. To better understand embodiments of this application, the following further describes an application scenario of the communication manner in the present disclosure with reference to FIG. 7 and FIG. 8.

Scenario 1: A target network element obtains security information of a terminal device from an LTM cell handover request.

FIG. 7 is a diagram of signaling interaction of a communication method according to an embodiment of this application. A procedure shown in FIG. 7 includes step 701 to step 710.

In step 701, a terminal device performs L3 measurement reporting, for example, reports a measurement result of each candidate cell to an original network element. Correspondingly, the original network element receives the measurement result, and determines, based on the measurement result of the terminal device, to perform an inter-network element cell handover. The original network element may include an original base station/CU.

Optionally, the measurement result may include an L3 measurement result.

In step 702, the original network element sends an LTM cell handover request to a target network element when determining to perform the inter-network element cell handover. The LTM cell handover request may carry security information of the terminal device. Target network element may include a target base station/CU and a potential target base station/CU.

Correspondingly, the target network elements such as the target base station and the potential target base station may receive the LTM cell handover request.

It should be understood that the LTM cell handover request carries the security information of the terminal device. For a specific option of the security information, refer to the descriptions in the foregoing embodiments. Details are not described herein again.

In step 703, the target network element may determine a security algorithm of the terminal device based on the security information, of the terminal device, carried in the LTM cell handover request.

In step 704, the target network element sends an LTM handover request response message to the original network element. The LTM handover request response message may carry the security algorithm of the terminal device.

In step 705, the original network element sends an RRC message to the terminal device. The RRC message may carry configuration information. The configuration information may include at least one of the following:
each candidate cell and one security algorithm correspondingly configured for the terminal device;
each candidate cell and one security algorithm set correspondingly configured for the terminal device, where the security algorithm set includes a plurality of security algorithms;
each candidate cell set/group and one security algorithm correspondingly configured for the terminal device; and
each candidate cell set/group and one security algorithm set correspondingly configured for the terminal device, where the security algorithm set includes a plurality of security algorithms.

In step 706, the terminal device stores the configuration information.

In step 707, the terminal device sends an RRC reconfiguration complete message to the original network element. The RRC reconfiguration complete message may notify the original network element that a resource configuration of a target cell has been completed.

In step 708, the original network element sends MAC CE signaling to the terminal device. The MAC CE signaling may carry the first indication information. The original network element sends the first indication information to the target network element. The first indication information may be used to indicate the terminal device and the target network element to synchronously perform key updating.

The first indication information may include at least one of the following: a next hop chaining counter NCC and algorithm indication information.

In step 709, the target network element and the terminal device may synchronously perform key updating under an indication of the first indication information.

In step 710, a random access procedure may be started between the target network element and the terminal device.

Scenario 2: A target network element obtains security information of a terminal device from a core network element. The core network element may include an AMF.

FIG. 8 is a specific flowchart of a communication method according to an embodiment of this application. A procedure shown in FIG. 8 includes step 801 to step 803.

In step 801, a terminal device performs L3 measurement reporting, for example, reports a measurement result to an original network element. Correspondingly, the original network element receives the measurement result, and determines, based on the measurement result of the terminal device, to perform an inter-network element cell handover. The original network element may include an original base station/CU.

Optionally, the measurement result may include an L3 measurement result.

In step 802, the original network element sends an LTM cell handover request to a target network element when determining to trigger the inter-network element cell handover. The LTM cell handover request may not carry security information of the terminal device. The target network element may include a target base station and/or a potential target base station.

Correspondingly, target network elements such as the target base station and the potential target base station may receive the LTM cell handover request.

It should be understood that, that the LTM cell handover request does not carry the security information of the terminal device can reduce overheads.

In step 803, the target network element may send a security obtaining request to a core network element AMF. The security obtaining request is used to indicate the core network element AMF to feed back the security information of the terminal device. Correspondingly, the target network element may receive the security information, of the terminal device, sent by the core network element.

In step 804, the target network element may determine a security algorithm of the terminal device based on the security information of the terminal device.

In step 805, the target network element sends an LTM handover request response message to the original network element. The LTM handover request response message may carry the security algorithm of the terminal device.

In step 806, the original network element sends an RRC message to the terminal device. The RRC message may carry configuration information. The configuration information may include at least one of the following:
each candidate cell and one security algorithm correspondingly configured for the terminal device;
each candidate cell and one security algorithm set correspondingly configured for the terminal device, where the security algorithm set includes a plurality of security algorithms;
each candidate cell set/group and one security algorithm correspondingly configured for the terminal device; and
each candidate cell set/group and one security algorithm set correspondingly configured for the terminal device, where the security algorithm set includes a plurality of security algorithms.

In step 807, the terminal device stores the configuration information.

In step 808, the terminal device sends an RRC reconfiguration complete message to the original network element. The RRC reconfiguration complete message may notify the original network element that a resource configuration of a target cell has been completed.

In step 809, the original network element sends MAC CE signaling to the terminal device. The MAC CE signaling may carry first indication information. The original network element sends the first indication information to the target network element. The first indication information may be used to indicate the terminal device and the target network element to synchronously perform key updating. The first indication information may include at least one of the following: a next hop chaining counter NCC and algorithm indication information.

In step 810, the target network element and the terminal device may synchronously perform key updating under an indication of the first indication information.

In step 811, a random access procedure may be started between the target network element and the terminal device.

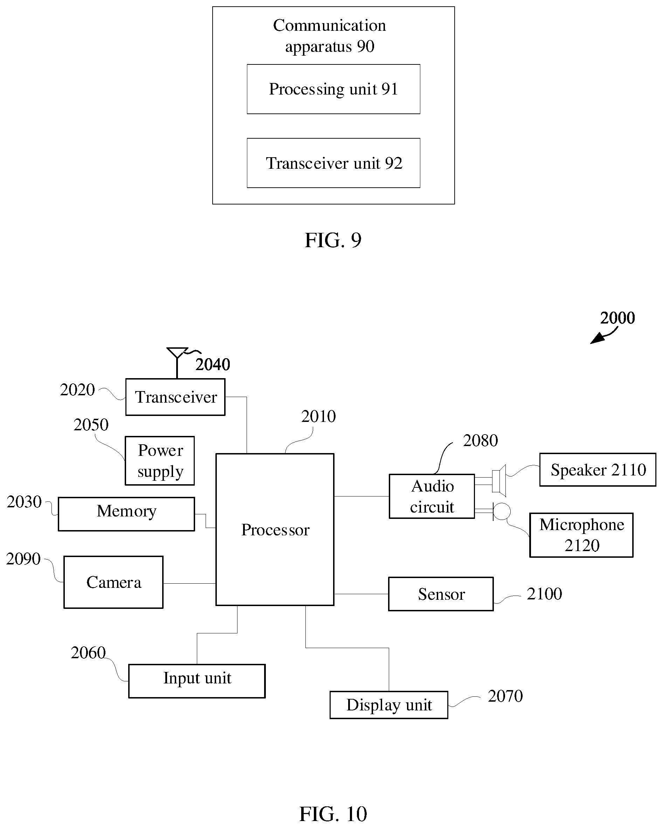

The communication methods provided in embodiments of this application are described in detail above with reference to FIG. 5 to FIG. 8. Apparatuses provided in embodiments of this application are described in detail below with reference to FIG. 9.

FIG. 9 is a block diagram of a communication apparatus 90 according to an embodiment of this application. As shown in FIG. 9, the communication apparatus 90 may include a processing unit 91 and a transceiver unit 92.

In a possible design, the communication apparatus 90 may implement an operation corresponding to the terminal device in the foregoing method embodiments. For example, the communication apparatus may be a terminal device, or a component, for example, a chip or a circuit, configured in the terminal device.

The communication apparatus may implement corresponding operations of the terminal device in the method embodiments shown in FIG. 5 to FIG. 8. For example, the transceiver unit 91 may perform steps such as 510, 530, 540, 550, 570, or 580 in the method 500, and the processing unit 91 may perform steps such as 520 and 560 in the method 50. In addition, the units in the communication apparatus 90 and the foregoing other operations and/or functions are respectively used to implement a corresponding procedure in the method embodiment shown in FIG. 5.

Specifically, when the communication apparatus 90 is configured to perform the communication method shown in FIG. 5, the transceiver unit 92 may be configured to receive first indication information. The first indication information is used to indicate to perform key updating synchronously with a target network element, the first indication information is sent when an inter-network element cell handover is performed, the inter-network element cell handover is a handover from an original cell corresponding to an original network element to a target cell corresponding to a target network element, and the original network element is different from the target network element.

Specifically, before the first indication information is received, the following operation is further included: receiving configuration information. The configuration information is used to configure a security algorithm determined by a candidate network element for a terminal device based on security information of the terminal device, and the candidate network element includes the target network element. The candidate network element may further include a potential target network element.

In another possible design, the communication apparatus 90 may implement an operation corresponding to the original network element in the foregoing method embodiments. For example, the communication apparatus may be an original network element, or a component, for example, a chip or a circuit, configured in the original network element.

Specifically, when the communication apparatus 90 performs the communication method shown in FIG. 5, the transceiver unit 92 may be configured to separately send first indication information to a target network element and a terminal device when an inter-network element cell handover is performed. The first indication information is used to indicate the target network element and the terminal device to synchronously perform key updating, and the inter-network element cell handover means that an original network element in which an original cell from which the terminal device performs a cell handover is located is different from the target network element in which a target cell is located.

Specifically, the transceiver unit 92 is further configured to send configuration information to the terminal device. The configuration information is used to configure a security algorithm determined by a candidate network element for the terminal device based on security information of the terminal device, and the candidate network element includes the target network element.

Specifically, the transceiver unit 92 is further configured to send a cell handover request to the candidate network element. The cell handover request is used to indicate the candidate network element to obtain the security information of the terminal device, the security information is used to determine the security algorithm of the terminal device, and the candidate network element includes the target network element.

In another possible design, the communication apparatus 90 may implement an operation corresponding to the candidate network element in the foregoing method embodiments, and the candidate network element may include a target network element. For example, the communication apparatus may be a candidate network element, or a component, for example, a chip or a circuit, configured in the candidate network element.

Specifically, when the communication apparatus 90 performs the communication method shown in FIG. 5, the transceiver unit 92 may be configured to receive first indication information. The first indication information is used to indicate to perform key updating synchronously with a terminal device, the first indication information is sent when an inter-network element cell handover is performed, the inter-network element cell handover is a handover from an original cell corresponding to an original network element to a target cell corresponding to a target network element, and the original network element is different from the target network element.

Specifically, the transceiver unit 92 is further configured to receive a cell handover request. The cell handover request is used to indicate the target network element to obtain security information of the terminal device. The processing unit 91 may be configured to determine a security algorithm of the terminal device based on the security information.

It should be understood that a specific process in which the units perform the foregoing corresponding steps is described in detail in the foregoing method embodiments, and for brevity, details are not described herein.

It should be further understood that, division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

It should be understood that the communication apparatus 90 may correspond to the terminal device 130 or the network elements 110 and 120 in the communication system 100 shown in FIG. 1. The processing unit 91 in the communication apparatus 90 may correspond to a processor in the terminal device 130 or the network elements 110 and 120, and instructions stored in a memory may be invoked by using the processor in the terminal device 130 or the network elements 110 and 120, to implement the foregoing functions such as network coding and original package obtaining. The transceiver unit 92 may correspond to an interface in the terminal device 130 or the network elements 110 and 120, and may implement the foregoing data receiving and/or sending functions in response to the instructions of the processor.

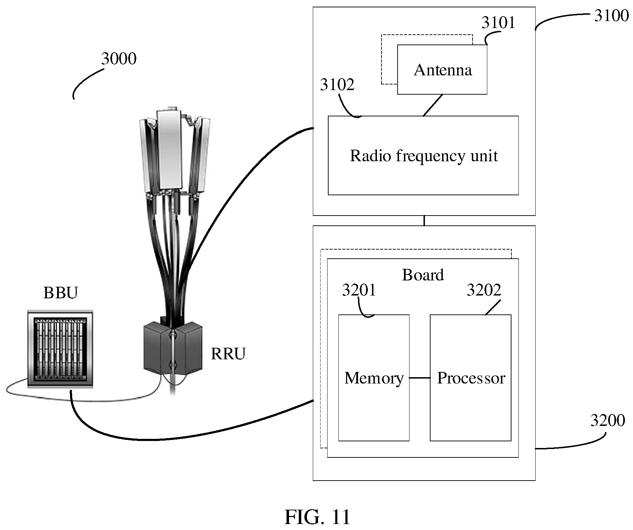

It should be further understood that the transceiver unit 92 in the communication apparatus 90 may be implemented by using a transceiver or a communication interface, for example, may correspond to a transceiver 2020 in a terminal device 2000 shown in FIG. 10 and a transceiver 3100 in a network device 3000 shown in FIG. 11. The processing unit 91 in the communication apparatus 90 may be implemented by using at least one processor, for example, may correspond to a processor 2010 in the terminal device 2000 shown in FIG. 10 and a processor 3200 in the network device 3000 shown in FIG. 11.

FIG. 10 is a schematic structural diagram of a terminal device 2000 according to an embodiment of this application. The terminal device 2000 may be used in the system shown in FIG. 1, to perform functions of the terminal device in the foregoing method embodiments. As shown in the figure, the terminal device 2000 includes a processor 2010 and a transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to receive/send a signal. Optionally, the terminal device 2000 may further include an antenna 2040, configured to send, via a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. In specific implementation, the memory 2030 may be integrated into the processor 2010, or may be independent of the processor 2010. The processor 2010 may correspond to a processing unit 11 in FIG. 11.

The transceiver 2020 may correspond to the transceiver unit 92 in FIG. 9. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 2000 shown in FIG. 10 can implement the processes related to the terminal device in the method embodiments in FIG. 5 to FIG. 8. Operations and/or functions of the modules in the terminal device 2000 are separately intended to implement corresponding procedures in the foregoing method embodiments. For details, refer to the descriptions in the foregoing method embodiments. To avoid repetition, detailed descriptions are properly omitted herein.

The processor 2010 may be configured to perform an action that is implemented inside the terminal device and that is described in the foregoing method embodiments. The transceiver 2020 may be configured to perform an action of sending from the terminal device to the network device or an action of receiving from the network device in the foregoing method embodiments. For details, refer to the descriptions in the foregoing method embodiments. The details are not described herein again.

Optionally, the terminal device 2000 may further include a power supply 2050, configured to supply power to various components or circuits in the terminal device.

In addition, to achieve more comprehensive functions of the terminal device, the terminal device 2000 may further include one or more of an input unit 2060, a display unit 2070, an audio circuit 2080, a camera 2090, a sensor 2100, and the like. The audio circuit may further include a speaker 2082, a microphone 2084, and the like.

FIG. 11 is a schematic structural diagram of a network element according to an embodiment of this application, for example, may be a schematic structural diagram of a base station. The base station 3000 may be used in the system shown in FIG. 1, to perform functions of the network device in the foregoing method embodiments. As shown in the figure, the base station 3000 may include one or more radio frequency units such as a remote radio unit (remote radio unit, RRU) 3100 and one or more baseband units (BBU) (also referred to as a distributed unit (DU)) 3300. The RRU 3100 may be referred to as a transceiver unit, and corresponds to the transceiver unit 92 in FIG. 9. Optionally, the transceiver unit 3100 may also be referred to as a transceiver machine, a transceiver circuit, or a transceiver, and may include at least one antenna 3101 and a radio frequency unit 3102. Optionally, the transceiver unit 3100 may include a receiving unit and a sending unit. The receiving unit may correspond to a receiver (or referred to as a receiver device or a receiver circuit), and the sending unit may correspond to a transmitter (or referred to as a transmitter device or a transmitter circuit). A part, namely, the RRU 3100 is mainly configured to: receive and send a radio frequency signal and convert the radio frequency signal and a baseband signal, for example, configured to send indication information to a terminal device. A part, namely, the BBU 3300 is mainly configured to: perform baseband processing, control a base station, and the like. The RRU 3100 and the BBU 3300 may be physically disposed together, or may be physically disposed separately, that is, in a distributed base station.

The BBU 3300 is a control center of the base station, may also be referred to as a processing unit, may correspond to the processing unit 91 in FIG. 9, and is mainly configured to implement a baseband processing function, for example, channel coding, multiplexing, modulation, and spreading. For example, the BBU (processing unit) may be configured to control the base station to perform operation procedures related to the network device in the foregoing method embodiments, for example, to generate the foregoing indication information and the like.

In an example, the BBU 3300 may include one or a plurality of boards, and the plurality of boards may jointly support a radio access network (for example, an LTE network) of a single access standard, or may respectively support radio access networks of different access standards (for example, an LTE network, a 5G network, or another network). The BBU 3300 further includes a memory 3201 and a processor 3202. The memory 3201 is configured to store necessary instructions and necessary data. The processor 3202 is configured to control the base station to perform a necessary action, for example, configured to control the base station to perform an operation procedure related to the network device in the foregoing method embodiments. The memory 3201 and the processor 3202 may serve one or a plurality of boards. In other words, a memory and a processor may be disposed on each board. Alternatively, the plurality of boards may share a same memory and a same processor. In addition, a necessary circuit may be further disposed on each board.

It should be understood that the base station 3000 shown in FIG. 11 can implement each process related to the target network device in the method embodiments in FIG. 2 to FIG. 10. Operations and/or functions of the modules in the base station 3000 are separately intended to implement corresponding procedures in the foregoing method embodiments. For details, refer to the descriptions in the foregoing method embodiments. To avoid repetition, detailed descriptions are properly omitted herein.

The foregoing BBU 3300 may be configured to perform an action implemented inside the network device in the foregoing method embodiments, and the RRU 3100 may be configured to perform an action of sending from the network device to the terminal device or an action of receiving from the terminal device in the foregoing method embodiments. For details, refer to the descriptions in the foregoing method embodiments. The details are not described herein again.

It should be understood that, the base station 3000 shown in FIG. 11 is merely a possible architecture of the network device, and should not constitute any limitation on this application. The method provided in this application is applicable to a network device in another architecture, for example, a network device including a CU, a DU, and an active antenna unit (active antenna unit, AAU). A specific architecture of the network device is not limited in this application.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps of the foregoing method may be implemented by using a hardware integrated logic circuit in the processor or instructions in a form of software. The steps of the method disclosed in combination with embodiments of this application may be directly performed by a hardware processor, or may be performed through a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein again.

It should be noted that the processor in embodiments of this application may be an integrated circuit chip, and has a signal processing capability. In an implementation process, the steps in the foregoing method embodiments may be completed by a hardware-integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams disclosed in embodiments of this application may be implemented or performed. The general-purpose processor may be a microprocessor, or the processor may be any conventional processor or the like. The steps of the method disclosed in combination with embodiments of this application may be directly performed by a hardware decoding processor, or may be performed through a combination of hardware and software modules in the decoding processor. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories in the systems and methods described in this specification are intended to include but not limited to these memories and any memory of another proper type.

According to the methods provided in embodiments of this application, this application further provides a computer program product. The computer program product includes computer program code, and when the computer program code is run on a computer, the computer is enabled to perform the method in any one of the embodiments shown in FIG. 2 to FIG. 10.

According to the method provided in embodiments of this application, this application further provides a computer-readable medium. The computer-readable medium stores program code. When the program code is run on a computer, the computer is enabled to perform the method in any one of the embodiments shown in FIG. 2 to FIG. 10.

According to the method provided in embodiments of this application, this application further provides a system. The communication system includes one or more terminal devices and one or more network devices.

The network device and the terminal device in the foregoing apparatus embodiments completely correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For functions of specific units, refer to the corresponding method embodiments. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated in figures, both a compute device and an application that runs on the compute device may be components. One or more components may reside within a process and/or a thread of execution, and a component may be located on one computer and/or distributed on two or more computers. In addition, these components may be executed in various computer-readable media storing various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are executed by hardware or software depends on specific applications and design constraint conditions of the technical solutions. Persons skilled in the art may use different methods to implement the described functions for each particular application, but it should not be considered that such an implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling or direct coupling or communication connection may be through some interfaces, and the indirect coupling or communication connection of the apparatus or the unit may be in an electrical, mechanical, or other form.

The units described as separate parts may or may not be physically separate, and components shown as units may or may not be physical units, that is, may be located in one position, or may be distributed on a plurality of network units. Some or all of the units may be selected based on actual requirements to achieve the objectives of the solutions in the embodiments.

In addition, the functional units in embodiments of this application may be integrated in one processing unit, each of the units may stand alone physically, or two or more units may be integrated in one unit.

In the foregoing embodiments, all or some of the functions of the functional units may be implemented by software, hardware, firmware, or any combination thereof. When software is used to implement the foregoing embodiments, all or some of the foregoing embodiments may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

When the function is implemented in the form of a software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be determined by the protection scope of the claims.

## Claims

1. A communication method, comprising:
receiving first indication information, wherein the first indication information is used to indicate to perform key updating synchronously with a target network element, the first indication information is sent when an inter-network element cell handover is performed, the inter-network element cell handover is a handover from an original cell corresponding to an original network element to a target cell corresponding to a target network element, and the original network element is different from the target network element.

2. The method according to claim 1, wherein before the receiving first indication information, the method further comprises:
receiving configuration information, wherein the configuration information is used to configure a security algorithm determined by a candidate network element for a terminal device based on security information of the terminal device, and the candidate network element comprises the target network element.

3. The method according to claim 2, wherein the configuration information comprises at least one of the following:
each candidate cell and one security algorithm correspondingly configured for the terminal device;
each candidate cell and one security algorithm set correspondingly configured for the terminal device, wherein the security algorithm set comprises a plurality of security algorithms;
each candidate cell set/group and one security algorithm correspondingly configured for the terminal device; and
each candidate cell set/group and one security algorithm set correspondingly configured for the terminal device, wherein the security algorithm set comprises a plurality of security algorithms.

4. The method according to claim 2, further comprising:
the security information of the terminal device is carried in a cell handover request received by the candidate network element, and the cell handover request is provided by the original network element; and
the security information of the terminal device is provided by a core network element for the candidate network element, and the core network element comprises an access and mobility management network element AMF.

5. The method according to claim 2, wherein the security information comprises at least one of the following:
a security capability of the terminal device, a security level of the terminal device, and a security attribute of the terminal device.

6. The method according to claim 2, wherein the configuration information is carried in an RRC reconfiguration message or is carried in media access control-control element MAC CE signaling.

7. The method according to any one of claims 1-6, wherein the first indication information comprises at least one of the following:
a next hop chaining counter NCC and algorithm indication information.

8. The method according to claim 7, wherein the algorithm indication information is at least one of the following:
indication information indicating whether to use an original security algorithm;
whether to execute an integrity protection algorithm and/or an encryption algorithm; and
an algorithm index.

9. The method according to any one of claims 1-8, wherein the first indication information is carried in media access control-control element MAC CE signaling for a handover or dedicated signaling.

10. A communication method, comprising:
separately sending first indication information to a target network element and a terminal device when an inter-network element cell handover is performed, wherein the first indication information is used to indicate the target network element and the terminal device to synchronously perform key updating, and the inter-network element cell handover means that an original network element in which an original cell from which the terminal device performs a cell handover is located is different from the target network element in which a target cell is located.

11. The method according to claim 10, further comprising:
sending configuration information to the terminal device, wherein the configuration information is used to configure a security algorithm determined by a candidate network element for the terminal device based on security information of the terminal device, and the candidate network element comprises the target network element.

12. The method according to claim 11, wherein the configuration information comprises at least one of the following:
each candidate cell and one security algorithm correspondingly configured for the terminal device;
each candidate cell and one security algorithm set correspondingly configured for the terminal device, wherein the security algorithm set comprises a plurality of security algorithms;
each candidate cell set/group and one security algorithm correspondingly configured for the terminal device; and
each candidate cell set/group and one security algorithm set correspondingly configured for the terminal device, wherein the security algorithm set comprises a plurality of security algorithms.

13. The method according to claim 11, further comprising:
sending a cell handover request to the candidate network element, wherein the cell handover request is used to indicate the candidate network element to obtain the security information of the terminal device, the security information is used to determine the security algorithm of the terminal device, and the candidate network element comprises the target network element.

14. The method according to claim 13, further comprising at least one of the following:
the security information of the terminal device is carried in the cell handover request; and
the security information of the terminal device is provided by a core network element for the candidate network element, and the core network element comprises an access and mobility management network element AMF.

15. The method according to claim 11, wherein the security information comprises at least one of the following:
a security capability of the terminal device, a security level of the terminal device, and a security attribute of the terminal device.

16. The method according to claim 11, wherein the configuration information is carried in an RRC reconfiguration message or is carried in media access control-control element MAC CE signaling.

17. The method according to any one of claims 10-16, wherein the first indication information comprises at least one of the following:
a next hop chaining counter NCC and algorithm indication information.

18. The method according to claim 17, wherein the algorithm indication information is at least one of the following:
indication information indicating whether to use an original security algorithm;
whether to execute an integrity protection algorithm and/or an encryption algorithm; and
an algorithm index.

19. The method according to any one of claims 10-18, wherein when the first indication information is sent to the terminal device, the first indication information is a handover media access control-control element MAC CE.

20. A communication method, comprising:
receiving first indication information, wherein the first indication information is used to indicate to perform key updating synchronously with a terminal device, the first indication information is sent when an inter-network element cell handover is performed, the inter-network element cell handover is a handover from an original cell corresponding to an original network element to a target cell corresponding to a target network element, and the original network element is different from the target network element.

21. The method according to claim 20, further comprising:
receiving a cell handover request, wherein the cell handover request is used to indicate the target network element to obtain security information of the terminal device; and
determining a security algorithm of the terminal device based on the security information.

22. The method according to claim 21, wherein the method further comprises at least one of the following:
the security information of the terminal device is carried in the cell handover request; and
the security information of the terminal device is provided by a core network element, and the core network element comprises an access and mobility management network element AMF.

23. The method according to claim 21, wherein the security information comprises at least one of the following:
a security capability of the terminal device, a security level of the terminal device, and a security attribute of the terminal device.

24. The method according to any one of claims 20-23, wherein the first indication information comprises at least one of the following:
a next hop chaining counter NCC and algorithm indication information.

25. A terminal device, comprising: a processor and a memory, wherein
the memory stores computer-executable instructions; and
the processor executes the computer-executable instructions stored in the memory, so that the terminal device performs the communication method according to any one of claims 1-9.

26. An original network element, comprising a processor and a memory, wherein
the memory stores computer-executable instructions; and
the processor executes the computer-executable instructions stored in the memory, so that the network element performs the communication method according to any one of claims 10-19.

27. A target network element, comprising a processor and a memory, wherein
the memory stores computer-executable instructions; and
the processor executes the computer-executable instructions stored in the memory, so that the network element performs the communication method according to any one of claims 20-24.

28. A computer-readable storage medium, storing a computer program, wherein when the computer program is executed by a processor, the method according to any one of claims 1-24 is implemented.

29. A chip system, comprising at least one processor and a communication interface, wherein the communication interface and the at least one processor are interconnected through a line, and the at least one processor is configured to run a computer program or instructions, to perform the method according to any one of claims 1-24.

30. A computer program product, comprising a computer program, wherein when the computer program is run, a computer is enabled to perform the method according to any one of claims 1 to 24.
